(19) Europäisches Patentamt

European Patent Office

Office européen des brevets

(11) Numéro de publication: **0 215 510 B1**

(12) **FASCICULE DE BREVET EUROPEEN**

(45) Date de publication de fascicule du brevet: **07.07.93** (51) Int. Cl.⁵: **G06F 15/72**

(21) Numéro de dépôt: **86201451.1**

(22) Date de dépôt: **22.08.86**

(54) **Processeur d'élimination de faces cachées pour la synthèse d'images à trois dimensions.**

(30) Priorité: **30.08.85 FR 8512925**

(43) Date de publication de la demande:
**25.03.87 Bulletin 87/13**

(45) Mention de la délivrance du brevet:
**07.07.93 Bulletin 93/27**

(84) Etats contractants désignés:
**DE FR GB IT SE**

(56) Documents cités:
**FR-A- 2 406 927**

(73) Titulaire: **LABORATOIRES D'ELECTRONIOUE PHILIPS**
**3, Avenue Descartes**
**F-94450 Limeil-Brévannes(FR)**
(84) Etats contractants désignés:
**FR**

(73) Titulaire: **N.V. Philips' Gloeilampenfabrieken**
**Groenewoudseweg 1**
**NL-5621 BA Eindhoven(NL)**
(84) Etats contractants désignés:
**DE GB IT SE**

(72) Inventeur: **Duthuit, Olivier**
**Société Civile S.P.I.D. 209, rue de l'Université**
**F-75007 Paris(FR)**
Inventeur: **Bonnet, Thierry**
**Société Civile S.P.I.D. 209, rue de l'Université**
**F-75007 Paris(FR)**
Inventeur: **Martin, Philippe**
**Société Civile S.P.I.D. 209, rue de l'Université**
**F-75007 Paris(FR)**

(74) Mandataire: **Landousy, Christian et al**
**Société Civile S.P.I.D. 156, Boulevard Haussmann**
**F-75008 Paris (FR)**

**Description**

L'invention concerne un processeur d'images pour former une image bidimensionnelle d'objets tridimensionnels vu d'un angle d'observation déterminé, processeur comportant:

- des moyens pour introduire des paramètres de polygone définissant un ensemble de polygones convexes par rapport à un espace de référence, ensemble de polygones qui représente un ou plusieurs objets tridimensionnels;
- des moyens pour déduire, à partir des paramètres de polygone, des paramètres d'éléments d'image formant une image bidimensionnelle d'un objet dans un plan de visualisation, plan de visualisation qui est fixé en fonction de l'angle d'observation par rapport à l'espace de référence; et
- des moyens pour sélectionner les éléments d'image les plus rapprochés du plan de visualisation et pour stocker de paramètres de ceux-ci.

Elle concerne également tout système de représentation d'images d'objet en trois dimensions, utilisant un tel processeur d'images.

Le graphisme à trois dimensions (3D) fait appel à la définition de la géométrie de l'objet en trois dimensions, puis au déplacement de l'objet dans un système de coordonnées, enfin au dessin de l'objet dans le plan d'un écran de visualisation. Les opérations de base de ce déplacement sont la rotation, la translation, la mise à l'échelle, la perspective. L'effet de perspective permet de restituer la forme de l'objet dans sa profondeur, et ceci est simulé d'une manière analogue à ce que l'oeil humain perçoit. L'objet est tout d'abord décrit dans un repère, sous forme de coordonnées spatiales, puis après les opérations de déplacement précédentes, ce système de coordonnées est transformé selon le système de coordonnées du dispositif de visualisation. On associe à cette description purement géométrique, des paramètres d'attribut tels que l'ombrage, la couleur, la texture ou la transparence qui assurent un meilleur rendu de l'objet à trois dimensions sur un écran à deux dimensions.

Les objets sont décrits selon des lignes, des courbes ou des plans qui peuvent eux mêmes être traduits en expressions algébriques. Selon une procédure largement répandue, les objets sont décrits selon un jeu de surfaces planes formées d'une suite de polygones convexes. Ceux-ci doivent avoir des dimensions assez petites pour représenter les surfaces courbes d'une manière adéquate. La méthode de base pour représenter un polygone consiste à dresser une liste de coordonnées de sommets, l'espace délimité par les polygones devant être fermé. Ces polygones peuvent ensuite être décrits par exemple par des équations de plan afin de permettre le déplacement des objets dans le système de coordonnées.

Pour la restitution de l'image de l'objet il est choisi un angle de vision sous lequel un observateur ne peut observer qu'un certain nombre de faces de l'objet, les autres lui étant obligatoirement cachées.

Pour que cette image représente l'objet d'une façon plus claire, plus lisible, et ne produise pas une apparence visuelle erronée les techniques de représentation d'images à trois dimensions utilisent, pour éliminer les faces cachées, la méthode appelée "algorithme de la mémoire de profondeur" (Z-buffer en anglais). Le principe consiste à imaginer l'écran de visualisation sous la forme d'une boîte de profondeur quasi-infinie. La surface de l'écran de visualisation est décomposée en un certain nombre d'éléments d'image régulièrement répartis en X et en Y. Sous l'angle de vision choisi, tous les polygones sont successivement analysés selon cette configuration bidimensionnelle des éléments d'image.

Au début du traitement des coordonnées de profondeur ZM mémorisées sont initialisées avec la coordonnée la plus éloignée admissible par le système. Puis le traitement de chaque polygone va s'effectuer de sorte que chaque coordonnée Z, associée à chaque élément d'image contenu dans un polygone, soit comparée à la coordonneée de profondeur ZM mémorisée dans la mémoire de profondeur. Lorsque Z est inférieur à ZM, cette coordonnée ZM est remplacée par la coordonnée Z qui devient ainsi la nouvelle coordonnée ZM associée à l'élément d'image. Tous les polygones constituant la description de l'objet sont analysés successivement, et ne sont ainsi conservés pour chaque élément d'image que les données ZM et les paramètres d'attribut C ne concernant que les points les plus rapprochés du point d'observation choisi. Ainsi les surfaces cachées ne sont pas apparentes sur l'écran.

Pour assurer la restitution de l'objet tridimensionnel par une image, on visualise les paramètres d'attribut associés à chaque face de l'objet correspondant à chaque polygone représenté. Ces paramètres d'attribut sont également stockés dans une mémoire d'attribut. Pour éviter que sur des arêtes ou des sommets des variations brutales de couleur ou d'ombrage n'apparaissent, on peut effectuer une interpolation d'attribut selon une ou plusieurs directions. Ainsi les attributs sont définis pour les sommets de chaque polygone, puis les attributs des éléments d'image intermédiaires sont interpolés pour remplir le polygone. Ceci permet de donner un aspect réaliste à l'image restituée.

On connaît le document FR 2 406 927 qui concerne un dispositif de production d'images d'objets tridimensionnels sur un écran de télévision en temps réel. Il décrit le mode de liaison entre un processeur d'ordre de priorité des objets et un générateur d'ordre de priorité des segments visibles. Le processeur met en oeuvre un algorithme de priorité effectuant un classement préalable des objets suivant leur distance par rapport à l'observateur. Mais, ce document ne décrit nullement des moyens de calcul et de comparaison de la profondeur de "Z" en chaque point de l'écran, et donc, ne traite ni des priorités au niveau des points, ni des intersections d'objets.

Il est donc éloigné de l'objet de l'invention.

Par ailleurs, tous ces mécanismes précédemment exposés de représentation à trois dimensions d'images d'objets sent mis en application dans le processeur décrit dans la publication intitulée : "Developing pixel-planes, a smart memory-based raster graphics system", H. FUCHS, J. POULTON, A. PAETH, A. BELL, 1982, Conference on Advanced Research in VLSI, M.I.T. January 27, pages 137, 146.

Il y est décrit un système qui :
- identifie tous les éléments d'images qui se trouvent dans un polygone,
- détermine les éléments d'image qui ne sont pas masqués par des polygones préalablement traités,
- détermine l'attribut de couleur de chaque élément d'image.

La vitesse est déterminée en faisant que le traitement s'opère simultanément sur tous les éléments d'image, et pour cela le système opère sur l'équation du plan du polygone $f(x,y) = Ax + By + C$ dans laquelle x et y sont les coordonnées d'un élément de l'image et les coefficients A, B, C, dépendent du polygone à traiter.

Ce traitement, à l'aide des équations du plan du polygone, fait que l'architecture est bidimensionelle, les coefficients A, B, C, étant introduits à l'aide d'une structure en arbre.

Un tel processeur présente des inconvénients. Premièrement pour traiter globalement l'équation du plan, il est nécessaire de disposer d'un réseau bidimensionnel de cellules de base de traitement. La surface du circuit intégré est dans ce case très importante. Deuxièmement une conséquence de ce qui précède est que la vitesse de fonctionnement est relativement limitée.

Le but de l'invention est de supprimer ces inconvénients et de définir un processeur dont l'organisation de fonctionnement permet un traitement très rapide de l'information, avec très faible surface occupée sur le semi-conducteur qui compose le circuit intégré. L'invention confère donc au processeur une structure de blocs opérant en mode série, avec un traitement de type pipeline réparti entre les paramètres relatifs aux éléments d'image: (X, Y), Z, attributs. Pour diminuer la surface de semi-conducteur utilisée, l'invention opère une analyse du plan de visualisation ligne après ligne.

Pour favoriser cette rapidité de traitement un autre but de l'invention est de permettre l'introduction cyclique renouvelable des coordonnées et des incréments donnés aux paramètres caractérisant les polygones.

Pour cela, l'invention telle que définie dans le préambule est remarquable en ce que
- les moyens pour déduire des paramètres d'éléments d'image sont réalises sous la forme d'une pipeline, pour déterminer ces paramètres d'éléments d'image en série, à partir de paramètres définissant une intersection d'un polygone avec un plan de balayage;
- ces moyens étant conçus pour recevoir des paramètres définissant des intersections d'un polygone avec un ensemble de plans de balayage, plans de balayage qui s'étendent parallèlement les uns aux autres et sensiblement transversalement au plan de visualisation compris dis l'espace de référence, sous la forme d'au moins les points terminaux des intersections dans une seule coordonnée et de la valeur et de la variation, dans les limites des intersections, de la distance par rapport au plan de visualisation.

Les paramètres définissant les intersections peuvent être présentés sous la forme requise au processeur d'images. Toutefois, le processeur d'images peut comporter des moyens pour calculer les valeurs requises à partir des autres paramètres introduits, définissant les polygones et l'ensemble de plans de balayage.

Les paramètres des intersections peuvent être introduits bit à bit dans les moyens de traitement série de type pipeline. Ils peuvent également être introduits par groupes de bits.

Elle est également remarquable en ce qu'elle comprend des moyens pour générer incrémentalement, pour chaque ligne de visualisation du dispositif de visualisation, l'ensemble des intersections (segments) de l'ensemble des polygones avec la ligne de visualisation.

L'invention est également remarquable en ce que le processeur d'images, auquel sont fournis les paramètres de polygones convertis en un ensemble de segments, qui lui sont fournis sous la forme de coordonnées $XM_o$, $XN_o$ de coordonnées et d'incréments de profondeur $Z_o$ et $dZ_o$, et de paramètres et d'incréments d'attributs $C_o$ et $dC_o$ relatifs à chaque segment, possède des moyens de traitement série de type pipeline qui comprennent n blocs, affectés chacun au traitement série des paramètres d'un des n éléments d'image d'une ligne de visualisation, le k-ième bloc comprenant (avec $1 \leq k \leq n$):

- un décrémenteur recevant les coordonnées ($XM_{k-1}$, $XN_{k-1}$) qu'il décrémente d'une unité binaire tel que: $XM_k = XM_{k-1}-1$, $XN_k = XN_{k-1}-1$,
- un organe de validation qui reçoit respectivement les signes ($SM_k$, $SN_k$) des résultats ($XM_k$, $XN_k$) délivrés par le décrémenteur, et détermine un signal de validation $FL_k$ tel que $FL_k = SM_k.\overline{SN}_k$, (le symbole (.) désignant l'opération logique ET), avec $FL_k = 1$ si l'élément d'image analysé est concerné par les coordonnées ($XM_k$, $XN_k$) et $FL_k = 0$ dans le cas inverse,
- une cellule de base,
   . qui reçoit les paramètres $Z_{k-1}$, $dZ_{k-1}$, $C_{k-1}$, $dC_{k-1}$,
   . qui détermine, sous le contrôle du signal $FL_k = 1$, les paramètres $Z_k$, $C_k$, $dZ_k$, $dC_k$ pour la cellule de base suivante,
   . qui mémorise les paramètres $Z_{k-1}$ et les compare à des valeurs anciennes stockées $Zc_k$(ancienne) et stocke des valeurs $Zc_k$(nouvelle) tel que :

$$Zc_k\text{(nouvelle)} = Zc_k\text{(ancienne)} \text{ si } Z_{k-1} \geq Zc_k\text{(ancienne)}$$
$$Zc_k\text{(nouvelle)} = Z_{k-1} \text{ si } Z_{k-1} < Zc_k\text{(ancienne)},$$

   . qui stocke les attributs $C_{k-1}$ associés aux nouvelles valeurs stockées $Zc_k$,
   . qui transmet les attributs $C_{k-1}$ à un bus externe.

L'ensemble de coordonnées de segments concerne i segments avec $1 \leq i \leq m$ soit ($XM_{Oi}$, $XN_{Oi}$). Toute donnée de type A(X, Z, ...) liée au segment i se propage successivement dans les n blocs indicés par k. Dans chaque bloc cette donnée $A_{ki}$ subit un traitement élémentaire avant sa transmission au bloc $k + 1$. Pour simplifier les notations on a omis ci-dessus l'indice i du segment.

Tout d'abord la représentation initiale des polygones par leurs sommets et leurs arêtes est transformée en une représentation par des segments correspondant à l'intersection de chaque polygone avec un plan de balayage perpendiculaire au plan de visualisation. Chaque polygone Pm, dont l'intersection avec la ligne de visualisation n'est pas vide, va couper le plan de balayage selon un segment.

Selon un premier mode de réalisation le processeur d'images comprend des moyens de traitement série de type pipeline des paramètres des segments, auxquels sont fournis les paramètres de m polygones Pm convertis en un ensemble de coordonnées de segments ($XM_O$, $XN_O$), ainsi que des paramètres et des incréments de profondeur $Z_O$ et $dZ_O$, et des paramètres et des incréments d'attributs $C_O$ et $dC_O$ relatifs à chaque segment ($M_O$, $N_O$).

Dans le repère initial dimensionné en X et Y en fonction de la taille de l'écran, un sommet d'un polygone va être repéré par les coordonnées Xu, Yu, Zu, Cu. On définit les incréments suivants :

$$IX_u = \frac{X_{u+1} - X_u}{LY_u} \qquad \text{avec } LY_u = Y_{u+1} - Y_u,$$

$$IZ_u = \frac{Z_{u+1} - Z_u}{LY_u} \;, \quad IC_u = \frac{C_{u+1} - C_u}{LY_u}$$

où u caractérise un sommet et $u + 1$ le sommet adjacent. Lorsque le plan de balayage se déplace d'un incrément $IY = 1$, les segments consécutifs obtenus vont se déplacer d'un incrément IX selon la direction X et IZ selon la direction Z. En opérant avec des incréments IY de valeur 1 on explore ainsi consécutivement tous les points possibles selon la direction Y. Chaque segment peut alors être représenté par ses paramètres extrêmes ($XM_O$, $XN_O$), ($ZM_O$, $ZN_O$), ($CM_O$, $CN_O$), les valeurs analogues consécutives des autres segments se déduisant les unes des autres d'un incrément IX selon la direction X, IZ selon la direction Z et IC selon la "direction" C. De même dans chaque plan de balayage il est possible d'analyser chaque segment en opérant des incréments de valeur $dX = 1$. Dans ce cas l'incrément selon Z est égal à

$$dZ_O = \frac{ZN_O - ZM_O}{XN_O - XM_O}$$

4

qui est constant pour tout le plan et selon C on a :

$$dC_0 = \frac{CN_0 - CM_0}{XN_0 - XM_0}.$$

Selon un second mode de réalisation le processeur d'images comprend :
- des moyens de conversion des paramètres de polygones en paramètres de segments qui constituent les intersections de l'ensemble des polygones avec chaque ligne de visualisation du dispositif de visualisation,
- et des moyens de traitement série, de type pipeline, des paramètres des segments, plusieurs segments étant traités simultanément.

Le décrémenteur permet de déterminer la position du segment dans la ligne de visualisation, notamment en vérifiant les signes des résultats obtenus à la sortie du décrémenteur. Uniquement dans le cas où les signes de ces résultats sont opposés, l'organe de validation engendre un signal $FL_k = 1$, qui valide les opérations effectuées par la cellule de base. Les signes opposés, indiquent que la cellule d'ordre k est concernée par le segment.

Le fonctionnement des n cellules étant identique, on considère par la suite la cellule d'ordre k. Toutes les données $Z_k$ successives sont ainsi traitées de la même manière et sont stockées dans un registre temporaire MT. D'autre part la mémoire de profondeur constituée d'un registre de profondeur Mp stocke des valeurs $Zc_k$ qui sont, en mode série, continuellement comparées aux valeurs $Z_{k-1}$ à l'aide d'un comparateur. Le résultat de cette comparaison est stocké dans une bascule qui contrôle le remplacement de l'ancienne valeur $Zc_k$ par la nouvelle valeur $Z_{k-1}$, si, pour l'élément d'image considéré, la nouvelle valeur correspond à un point plus rapproché du plan de visualisation que ne l'était l'ancienne valeur et si $FL_k = 1$. Le registre de profondeur Mp est bouclé sur lui-même à travers un multiplexeur qui permet soit de renouveler la valeur en mémoire, soit de conserver la valeur précédemment stockée.

Lorsque $FL_k = 1$, une cellule de base $B_k$ traite également l'information d'attribut qui peut être un attribut de couleur $C_k$. De la même façon que pour les coordonnées de profondeur, on détermine un incrément d'attribut $dC_k$. La cellule de base $B_k$ détermine le nouvel attribut $C_k = C_{k-1} + dC_{k-1}$ et stocke $C_{k-1}$ dans un registre d'attribut.

Ce registre d'attribut est mis à jour en même temps que la mémoire de profondeur sous le contrôle des mêmes moyens.

Les données concernant les coordonnées $XM_k$, $XN_kZ_k$ et l'attribut $C_k$ sont traitées par le processeur selon une procédure de type pipeline.

Pour cela le temps est réparti en périodes élémentaires de durée u, regroupées en périodes de base de durée $T = a.u$ (a entier, longueur du mot). Le processeur traite, au cours de la période T, les coordonnées $X_k$ d'un segment dans le décrémenteur $D_k$, et les coordonnées $Z_{k-1}$ et les attributs $C_{k-1}$ dans la cellule de base $B_k$. Au cours d'une période de base $T_r$, le processeur traite simultanément :
- les coordonnées $X_{k,r}$ d'un élément d'image $E_k$, dans le décrémenteur $D_k$,
- les coordonnées $Z_{k,r-1}$ de l'élément d'image $E_k$, dans la cellule de base $B_k$,
- les attributs $C_{k,r-2}$, de l'élément d'image $E_k$ dans la cellule de base $B_k$. Ce mode pipeline de traitement série assure une grande vitesse d'exécution au processeur d'image.

L'ensemble des n cellules de base consécutives, qui traitent la totalité d'une ligne du dispositif de visualisation, sont connectées à un bus de sortie de données qui transmet les informations d'attribut du processeur d'images vers un dispositif de visualisation.

Selon le premier mode de réalisation les paramètres des polygones sont fournis au processeur d'images sous la forme de segments $(M_0,N_0)$ qui sont déterminés par logiciel traité par un ordinateur relié au processeur d'images.

Le rôle des moyens de conversion des polygones en segments est de déterminer, pour chaque ligne de visualisation, les deux points d'intersection du plan de balayage à $Y = c^{te}$ avec le polygone. Il s'agit donc de déterminer les coordonnées du point gauche $XM_0$ et du point droit $XN_0$. Un segment est donc entièrement déterminé par les coordonnées des points $M_0$ et $N_0$.

Mais selon un autre mode de réalisation de l'invention, il est également possible que les polygones soient convertis en segments $XM_0$, $XN_0$ à l'aide d'un circuit de conversion de polygones en segments.

Dans ce cas l'invention concerne un processeur d'images de scènes décrites en trois dimensions, comprenant un circuit de conversion de polygones en segments et des moyens de traitement série, de type pipeline, des paramètres des segments. Ce circuit lit dans une mémoire d'image les coordonnées et les

5

attributs concernant chaque polygone tel que par exemple cela sera ultérieurement indiqué sur le TABLEAU 1.

Le principe de ce circuit est de faire circuler l'ensemble des variables X, (respectivement Z), (respectivement C) dans un registre à décalage à l'extrémité duquel est placée une cellule additionnant la donnée sortante avec la donnée IX, (respectivement IZ), (respectivement IC) lue dans la mémoire d'image. La sortie de ladite cellule est bouclée sur l'entrée du registre à décalage de sorte que la donnée est continûment déterminée pour chaque ligne à $Y = c^{te}$.La longueur du registre à décalage est constante et peut contenir un nombre déterminé de paramètres descriptifs de polygones. Ainsi pour un plan à $Y = c^{te}$ représenté sur l'écran par une ligne de visualisation, il est intéressant de pouvoir stocker, par exemple 32 segments ($M_O$, $N_O$), ce qui permet un traitement en temps réel. Le contrôle du séquencement du registre à décalage est effectué à l'aide d'un circuit de commande qui prend en compte les tests de fin d'arête et de fin de polygones, et qui contrôle également le fonctionnement d'un séquenceur d'adresses qui commande les lectures de la mémoire d'image, ce qui permet de renouveler les polygones chargés dans le registre à décalage au fur et à mesure du déroulement du traitement des données.

L'invention sera mieux comprise à l'aide des figures suivantes, données à titre d'exemples non limitatifs, qui représentent :

Figure 1 : un dessin représentant la transformation des polygones en segments,

Figure 2 : un schéma-bloc du processeur d'images selon l'invention,

Figure 3 : un schéma-bloc d'une cellule de base faisant partie des moyens de traitement série de type pipeline selon l'invention,

Figure 4 : un schéma d'un multiplexeur des moyens de traitement de la figure 3,

Figure 5 : un diagramme des temps correspondant aux moyens de traitement de la figure 3,

Figures 6, 7, 8 : une illustration d'un exemple simplifié,

Figure 9 : un schéma-bloc des moyens de conversion des paramètres des polygones en paramètres de segments,

Figure 10 : un schéma-bloc du séquenceur d'adresses des moyens de conversion de la figure 9.

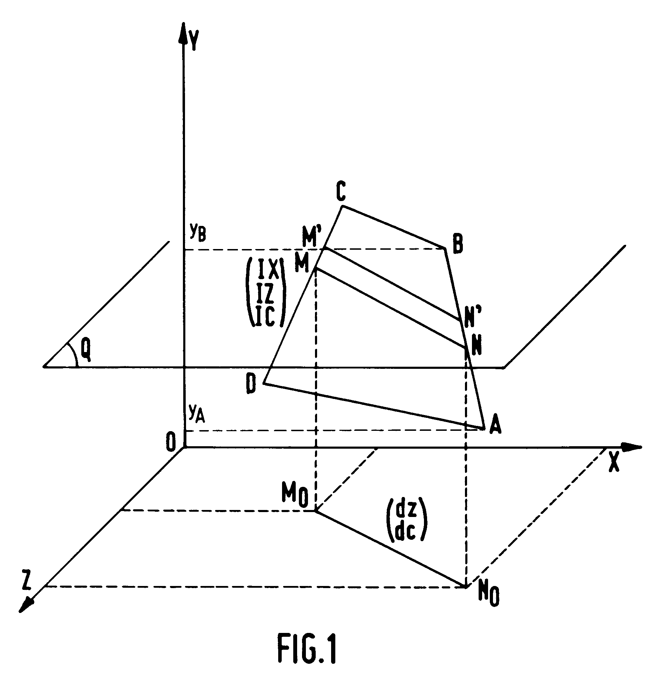

Sur la figure 1 est représenté un polygone plan ABCD représentant une facette définissant un petit élément de la surface d'un objet. Ce polygone ABCD est défini par les coordonnées de ses sommets, ainsi que par des paramètres de polygones. Ces paramètres des polygones convexes, caractérisant l'objet à représenter par une image 3D, sont stockés dans une mémoire d'images. Ces paramètres déterminés dans un repère de visualisation vont être par exemple :

- la pente dZ du plan du' polygone par rapport à des plans à $Y = c^{te}$,
- un sommet initial gauche (A),
- le nombre d'arêtes gauches du polygone : Narg = 2
- une liste de paramètres pour les arêtes gauches,
- un sommet initial droit (A),
- le nombre d'arêtes droites du polygone : Nard = 2
- une liste de paramètres pour les arêtes droites.

Pour chaque polygone la valeur dZ est une constante.

Dans la plupart des cas, les sommets gauche et droit sont identiques, point A de l'exemple. Dans les cas particuliers où la première arête rencontrée est parallèle au plan Q, les sommets gauche et droit sont différents.

Chaque arête du polygone est déterminée comme un vecteur de déplacement permettant de définir un point d'arrivée. Chaque plan à $Y = c^{te}$ étant déduit du suivant par des incréments IY = 1 les arêtes de chaque polygone vont être décrites par :

- un incrément en X, soit IX ;
- un incrément en Z, soit IZ ;
- un incrément d'attribut, soit IC ;
- la hauteur de l'arête définie par LY = Y(fin)-Y(début).

Dans l'exemple présent du polygone ABCD la hauteur de l'arête AB est égale à $LY = Y_B - Y_A$ et les incréments sont :

$$IX = \frac{X_B - X_A}{LY} \, ,$$

$$IZ = \frac{Z_B - Z_A}{LY} \quad et$$

$$IC = \frac{C_B - C_A}{LY} \, .$$

Pour chacune des quatre arêtes l'on peut ainsi déterminer LY, IX, IZ et IC. La présentation d'une image sur un écran nécessite la définition d'un plan de balayage de l'image pour assurer un traitement séquentiel des opérations. Ce plan de balayage est repéré par la lettre Q sur le dessin de la figure 1 dans le repère XYZ, où la direction Z indique la direction perpendiculaire à l'écran, en arrière de celui-ci.

Le polygone ABCD coupe le plan Q selon le segment MN. Ainsi les plans de balayage successifs vont chaque fois couper le polygone ABCD selon des segments MN, M'N', etc... Le point N' est distant du point N tel que $|YN - YN'| = 1$ ou $IY = 1$, et les coordonnées du point N' seront obtenues en utilisant les incréments IX, IZ, IC, et dans le cas de la coordonnés XN on aura $XN' = XN + IX$. Chaque plan de balayage détermine à chaque fois une ligne de visualisation sur l'écran.

De cette manière il est possible de déterminer les coordonnées de tous les segments MN, distants de $IY = 1$, qui sont les intersections du polygone ABCD avec les plans Q successifs. Chaque segment MN donne dans le plan XOZ un segment $M_0N_0$. Si l'on parcourt le segment $M_0N_0$ avec un incrément tel que $IX = 1$ les coordonnées Z des points ainsi déterminées seront distantes d'un incrément fixe :

$$dZ_0 = \frac{ZN_0 - ZM_0}{XN_0 - XM_0}$$

de même :

$$dC_0 = \frac{CN_0 - CM_0}{XN_0 - XM_0} \, .$$

Le processeur d'images opère donc le traitement des coordonnées XM, XN, Z, des incréments $dZ_0$ et $dC_0$ et de l'attribut C concernant tous les segments $M_0N_0$ de tous les polygones ABCD décrivant l'objet.

Afin de pouvoir traiter tous ces paramètres des segments il est nécessaire de convertir les paramètres des polygones tels qu'ils sont stockés dans la mémoire d'images. Cette conversion est réalisés par des moyens de conversion.

Le rôle des moyens de conversion des polygones en segments est de déterminer, pour chaque ligne de balayage à $Y = c^{te}$, les deux points d'intersection (M,N) du plan de balayage à $Y = c^{te}$ avec le polygone. Il s'agit donc de déterminer ensuite les coordonnées du point gauche $XM_0$ et du point droit $XN_0$. Un segment est donc entièrement déterminé par les coordonnées des points $M_0$ et $M_0$.

Le point $M_0$ est caractérisé par :
- une abscisse gauche : $XM_0$
- une profondeur gauche : $ZM_0$
- un attribut gauche : $CM_0$.

Le point $N_0$ est caractérisé par :
- une abscisse droite : $XN_0$
- une profondeur droite : $ZN_0$
- un attribut droit : $CN_0$.

La pente dZ à $Y = C^{te}$ relative au polygone concerne également le segment.

Pour un polygone donné, on aura ainsi les paramètres suivants :

```
                          dZ
        à gauche :    XM_0
                      ZM_0
                      CM_0
                      Narg
                    . . . . . . . .
                    |   IX   |
        arête i     |   IZ   |    répété (Narg) fois pour le polygone
                    |   IC   |
                    |   LY   |
                    . . . . . . . .
        à droite :    XN_0
                      ZN_0
                      CN_0
                      Nard
                    . . . . . . . .
                    |   IX   |
        arête l     |   IZ   |    répété (Nard) fois pour le polygone
                    |   IC   |
                    |   LY   |
                    . . . . . . . .
```

## TABLEAU I

Le logiciel va ainsi traiter tous les polygones et pour chaque $Y = c^{te}$ déterminer les coordonnnées des points $XM_0$, $XN_0$. Ces valeurs sont alors introduites dans le processeur d'images pour y être traitées comme cela vient d'être indiqué.

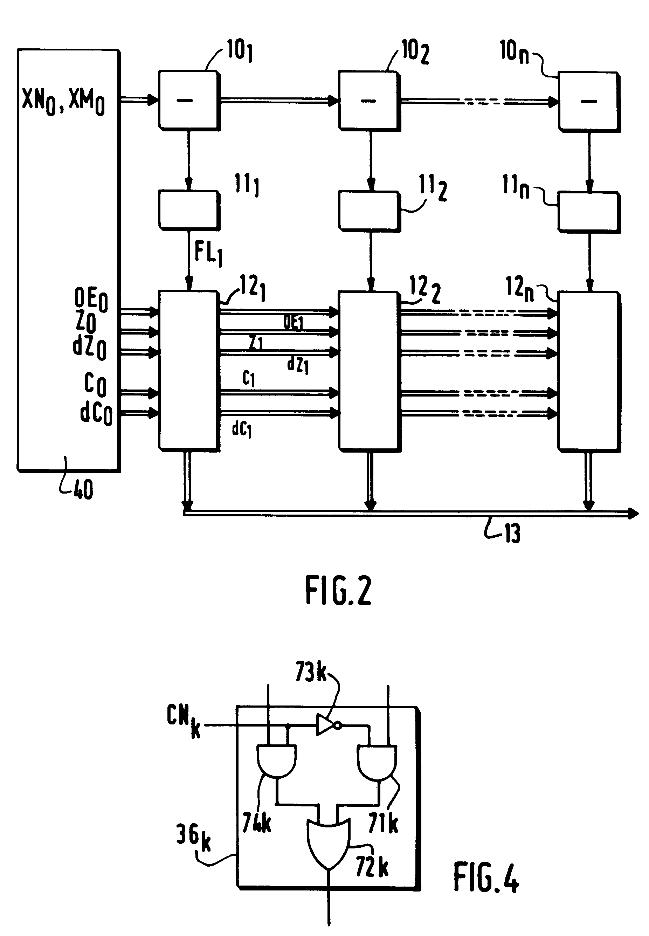

Le schéma bloc des moyens de traitement série du processeur d'images est représenté sur la figure 2. Les coordonnées $XM_0$, $XN_0$ du segment $M_0N_0$ sont introduites avec le bit de poids le plus faible en tête dans un décrémenteur $10_1$ qui soustrait une unité binaire aux données.

Les signes $SM_1$ et $SN_1$ des résultats de la décrémentation des données $XM_0$ et $XN_0$ sont stockés dans l'organe de validation $11_1$. Si après la décrémentation le résultat est négatif sur $XM_1$ ($= XM_0-1$) ou $XN_1$ - ($= XN_0-1$), respectivement $SM_1$ ou $SN_1$ sont, par exemple, mis à l'état logique 1. Dans le cas contraire $SM_1$ et/ou $SN_1$ sont mis alors à l'état logique 0. L'organe de validation $11_1$, détermine l'état logique du signal $FL_1$ défini par $FL_1 = SM_1 . \overline{SN_1}$. Ce signal $FL_1$ est introduit dans la cellule de base $12_1$. La partie du circuit constituée du décrémenteur $10_1$, de l'organe de validation $11_1$ et de la cellule de base $12_1$ est répétée n fois consécutivement (n, nombre d'éléments d'images dans une ligne de visualisation). La sortie du décrémenteur $10_1$ est reliée à l'entrée du décrémenteur $10_2$ qui effectue le même type d'opération mais sur les coordonnées $XM_1$, $XN_1$. Ceci se reproduit jusqu'au décrémenteur $10_n$. Les organes de validation $11_2$ ... $11_n$ sont respectivement affectés aux décrémenteurs $10_2$ ... $10_n$ et effectuent les mêmes tests que l'organe de validation $11_1$. Les organes de validation $11_1$ à $11_n$ contrôlent ainsi respectivement le fonctionnement des cellules de base $12_1$ à $12_n$. Les décrémenteurs en combinaison avec leur organe de validation respectif servent à déterminer la position du segment dans la ligne de visualisation en cours de traitement. Considérons l'exemple d'un segment $XM_0 = 0$, $XN_0 = 3$. Pour cet exemple l'état logique du signal $FL_k$ (1

8

≤ k ≤ n) est déterminé comme indiqué dans le tableau II ci-dessous.

| Décrémenteur | $10_1$ | $10_2$ | $10_3$ | $10_4$ |
|---|---|---|---|---|
| $XM_k-1$ | $-1$ | $-2$ | $-3$ | $-4$ |
| $XN_k-1$ | $2$ | $1$ | $0$ | $-1$ |
| $SM_k$ | $1$ | $1$ | $1$ | $1$ |
| $SN_k$ | $0$ | $0$ | $0$ | $1$ |
| $FL_k$ | $1$ | $1$ | $1$ | $0$ |

TABLEAU II

Le tableau II permet de constater que $FL_k = 1$ lorsque le segment considéré se trouve dans la partie de la ligne de visualisation considérée.

La cellule de base 12 reçoit également les données $dZ_O$ et $dC_O$ qui caractérisent les incréments propres au segment, les données $Z_O$ et $C_O$ qui caractérisent la coordonnée et l'attribut de couleur de l'origine du segment et un signal $OE_O$ de fin d'exploration de ligne de visualisation et d'initialisation de la ligne suivante. Cette initialisation s'effectue en forçant la mise à jour des paramètres Z et C par ceux du premier segment rentrant qui constitue le segment de fond. Les données $XM_O$, $XN_O$, $Z_O$, $dZ_O$, $C_O$, $dC_O$ sont fournies aux moyens de traitement série, du type pipeline, du processeur d'images, par des moyens de conversion 40 de paramètres de polygones en paramètres de segments. Chaque cellule transmet à celle qui lui succède le résultat $Z_k$ de l'opération $Z_k = Z_{k-1} + (FL_k.dZ_{k-1})$, le résultat $C_k$ de l'opération $C_k = C_{k-1} + (FL_k. dC_{k-1})$ ainsi que les deux incréments $dZ_k$ et $dC_k$.

Les résultats d'attribut déterminés par chaque cellule de base $12_1...12_k...12_n$ sont lus à l'aide d'un bus de sortie 13.

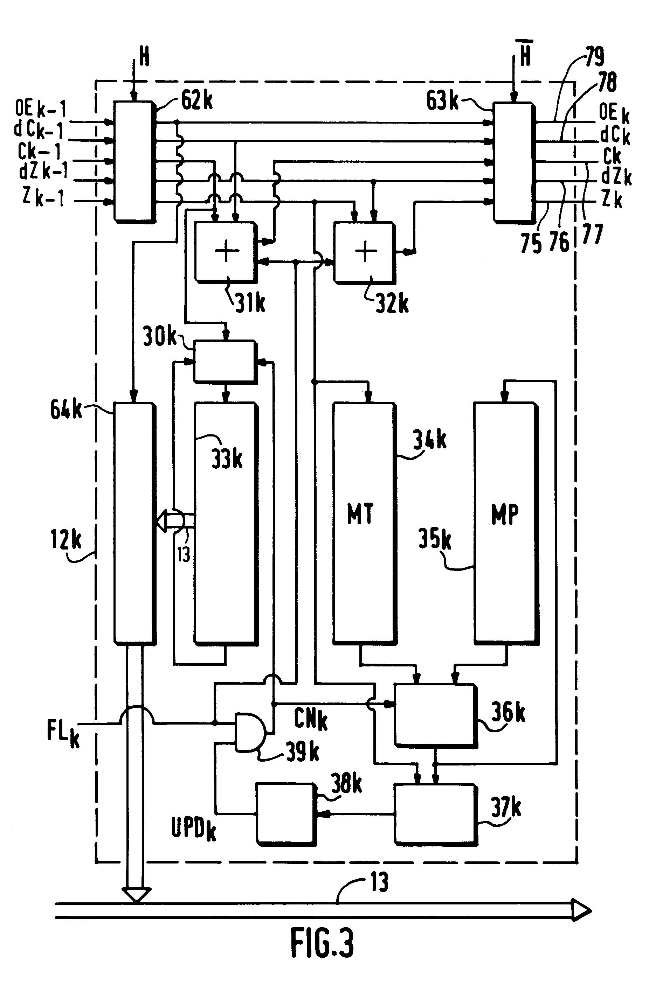

La figure 3 représente le schéma-bloc d'une cellule de base de la figure 2 constituant les moyens de traitement des coordonnées de profondeur et des attributs du processeur d'image. La kième cellule de base $12_k$ reçoit, de la cellule de base qui la précède, les signaux $Z_{k-1}$, $dZ_{k-1}$, $C_{k-1}$, $dC_{k-1}$, et transmet à la cellule de base qui la suit les signaux $Z_k$, $dZ_k$, $C_k$, $dC_k$. La kième cellule de base $12_k$ reçoit également le signal $FL_k$. Les signaux $C_{k-1}$, $dC_{k-1}$, $Z_{k-1}$, $dZ_{k-1}$ et $OE_{k-1}$ entrent sur une bascule à cinq entrées 62k, contrôlée par une horloge H, respectivement sur les connexions 77, 78, 75, 76, 79. De même, les signaux $C_k$, $dC_k$, $Z_k$, $dZ_k$ et $OE_k$ sortent d'une bascule à cinq entrées 63k contrôlée par l'horloge $\overline{H}$. Le signal $OE_k$ est déclenché sur le dernier segment de la ligne de visualisation en cours de traitement. Pour des raisons de simplification d'écriture on garde dans chaque cas la même appelation pour ces différents signaux de part et d'autre de chacune des bascules.

Les signaux $Z_{k-1}$ et $dZ_{k-1}$ entrent dans un additionneur $32_k$ qui effectue l'opération sous le contrôle du signal $FL_k$ issu de l'organe de validation. La valeur $Z_{k-1}$ entre dans un registre temporaire MT $34_k$. Le résultat de l'addition $Z_k = Z_{k-1} + FL_k.dZ_{k-1}$ sort de la cellule de base $12_k$ par la connexion 75 pour être introduit dans la cellule de base suivante $12_{k+1}$. La sortie du registre temporaire MT $34_k$ entre dans un multiplexeur $36_k$ dont la sortie entre dans un registre de profondeur MP $35_k$.

La sortie du multiplexeur $36_k$ entre également dans un comparateur $37_k$ qui reçoit également $Z_{k-1}$ et délivre un signal de comparaison $UPD_k$ qui est stocké dans la bascule $38_k$.

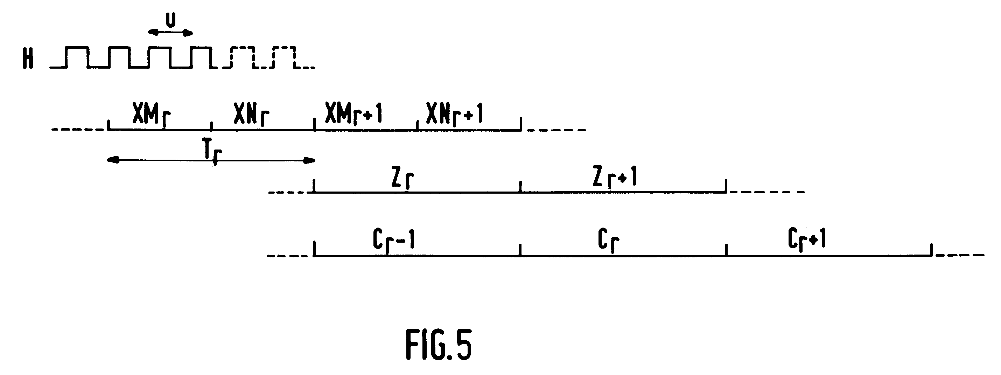

Les registres $34_k$ et $35_k$ sont des registres à décalage. La sortie du registre $35_k$ est reliée à l'une des entrées du multiplexeur $36_k$. Celui-ci sélectionne soit la sortie du registre $34_k$ soit la sortie du registre $35_k$ selon l'état logique d'un signal de test $CN_k$ délivré par une porte $39_k$ tel que $CN_k = FL_k.UPD_k$. Le multiplexeur $36_k$ est représenté sur la figure 4. Il est constitué d'une porte ET $74_k$ qui effectue l'opération ET logique entre le signal de test $CN_k$ issu de la porte $39_k$ et la sortie du registre $34_k$. Le signal de test $CN_k$

est inversé par l'inverseur $73_k$ dont la sortie entre dans une porte ET $71_k$ avec la sortie du registre $35_k$. Les sorties des portes ET $71_k$ et $74_k$ entrent dans une porte OU $72_k$ dont la sortie entre dans le registre $35_k$.

La porte ET $39_k$ reçoit le signal $FL_k$ et la sortie de la bascule $38_k$. La sortie de la porte ET $39_k$ contrôle le fonctionnement d'un sélecteur $30_k$ qui reçoit l'attribut $C_{k-1}$.

Un additionneur $31_k$ reçoit les signaux $C_{k-1}$ et $dC_{k-1}$ et effectue l'opération $C_k = C_{k-1} + FL_k.dC_{k-1}$ sous contrôle du signal $FL_k$.

Le signal $C_{k-1}$ est stocké dans un registre d'attribut $33_k$ à décalage sous le contrôle de la porte ET $39_k$ à travers le sélecteur $30_k$ qui peut aiguiller sur le registre $33_k$, soit la nouvelle valeur $C_{k-1}$ lorsque $CN_k = 1$, soit recopier l'ancien contenu dans le cas contraire. Les données contenues dans le registre d'attribut $33_k$ sont placées sur un bus parallèle 13 commun à toutes les cellules via un circuit de sortie à trois états $64_k$ commandé par le signal $OE_{k-1}$. Il est également possible d'effectuer la sortie de la couleur en mode série séquencé.

Les registres à décalage $34_k$ et $35_k$ effectuent en synchronisme des décalages des données qui y sont stockées. Le registre de profondeur $35_k$ étant rebouclé sur lui-même par l'intermédiaire du multiplexeur $36_k$ déjà indiqué, les informations qu'il contient vont donc soit pouvoir régulièrement réapparaître sur sa sortie, soit être remplacées par celles en provenance du registre 34k.

Le principe de base étant de renouveler une cote de profondeur Z trop profonde, par une autre déterminée plus rapprochée par le processeur selon l'invention, il s'ensuit que pendant des durées d'analyse explicitées ci-après, certaines de ces valeurs Z resteront inchangées tandis que d'autres devront être modifiées.

Le registre temporaire MT $34_k$ stocke toutes les informations $ZT = Z_{k-1}$ nouvellement déterminées correspondant à une ligne. Le registre de profondeur MP $35_k$ stocke toutes les informations $Zc_k$ sélectionnées par le multiplexeur 36k, après que l'opération de rafraîchissement a été effectuée et les réinsère cycliquement dans la procédure de comparaison jusqu'à ce que l'ensemble des segments pour l'ensemble des points de l'écran ait été testé.

Lorsqu'une modification s'avère nécessaire sur la valeur de $Zc_k$, tel que $Zc_k = Z_{k-1}$, le processeur déclenche alors l'introduction de la nouvelle valeur de l'attribut de couleur $C_{k-1}$ qui lui correspond en positionnant le signal $CN_k = 1$.

Le registre d'attribut $33_k$ ne fait l'objet d'aucune procédure de comparaison, et stocke les attributs $C_{k-1}$, pour toute la ligne, sous le contrôle de la décision prise pour la valeur de profondeur $Z_{k-1}$.

Le mode de fonctionnement des moyens de traitement série de type pipeline du processeur est le suivant.

Pour chaque segment les couples de valeurs $XM_O$, $XN_O$ sont introduits en mode série, avec le bit de poids le plus faible en tête. Ces valeurs sont décrémentées dans le décrémenteur $10_1$ de la figure 2. Après le passage de l'élément binaire de poids fort de $XM_O$ constituant la fin de la valeur numérique introduite, le signe $SM_1$ du résultat à la sortie du décrémenteur $10_1$ est mémorisé dans l'organe de validation $11_1$. La deuxième valeur $XN_O$ est introduite à son tour, et de même le signe $SN_1$ du résultat est mémorisé dans l'organe de validation $11_1$. Celui-ci détermine alors la valeur du signal $FL_1 = SM_1.\overline{SN_1}$.

Lorsque $FL_1 = 0$ le point en cours d'analyse n'appartient pas ou n'appartient plus au segment courant et les données $Z_O$ transitent seulement à travers la cellule de base vers la cellule suivante sans ajouter dZ. Dans ce cas on a $ZM_1 = ZM_O$, $ZN_1 = ZN_O$.

Lorsque $FL_1 = 1$ le point en cours d'analyse appartient au segment courant et valide la suite des opérations.

Les données $ZM_O$ et $dZ_O$ sont additionnées dans l'additionneur $32_1$ tel que $ZM_1 = ZM_O + dZ_O$ et $ZM_O$ est stocké dans le registre temporaire $34_1$. Simultanément $ZM_O$ est comparé au contenu que possède le registre de profondeur $35_1$ à l'aide du comparateur $37_1$. Lorsque $ZM_O$ est inférieure à l'ancienne valeur stockée dans le registre de profondeur $35_1$, pour le même élément d'image, alors le signal de comparaison $UPD_1$ est mis à l'état logique 1. Puisque $FL_1 = 1$, $CN_1 = UPD_1.FL_1$ où $CN_1 = 1$ et l'ancienne valeur stockée dans $35_1$ est remplacée par la valeur $ZM_O$. Dans le cas contraire l'ancienne valeur est réintroduite à l'entrée du registre de profondeur $35_1$. Ce registre stocke toutes les valeurs rafraichies correspondant à un point d'une ligne de visualisation. Le signal $CN_1$ contrôle alors le chargement de $C_O$ dans le registre d'attribut $33_1$.

Le déroulement des différentes opérations qui viennent d'être décrites s'effectue selon une procédure "pipe-line", c'est-à-dire que les opérations relatives à un même élément d'image pour un segment donné sont décalées dans le temps. Ceci est indiqué sur le diagramme de la figure 5. Toutes les opérations sont synchronisées par une horloge H de période élémentaire u avec un cycle de base de durée $T = a.u$ (a entier). Les opérations décrites, effectuées sur les coordonnées $XM_O$, $XN_O$ du segment, sont effectuées les premières, $XM_O$ entrant le premier avec le bit de poids faible en tête. Chacune des opérations sur $XM_r$ et

$XN_r$, pour un élément d'image $E_r$, au cours d'un cycle $T_r$, dure la moitié d'un cycle de base de durée T. L'indice de l'élément d'image $E_r$ et celui du cycle $T_r$ sont arbitrairement choisis identiques. Au cours du cycle de base suivant $T_{r+1}$ les opérations sur les données $XM_{r+1}$ et $XN_{r+1}$ sont effectuées simultanément avec les opérations sur la cote de profondeur $Z_r$. Au cours du cycle de base suivant $T_{r+2}$ les opérations sur les données $XM_{r+2}$ et $XN_{r+2}$ sont effectuées simultanément avec les opérations sur la cote de profondeur $Z_{r+1}$ et sur l'attribut $C_r$. Ce mode pipeline triple permet de réaliser les opérations dans un temps court.

Pour initialiser les registres $35_k$ et $33_k$ à chaque début de ligne, le signal $OE_k$ force la sortie $UPD_k$ du comparateur $38_k$ à 1, ce qui provoque le chargement des paramètres Z et C du segment de fond.

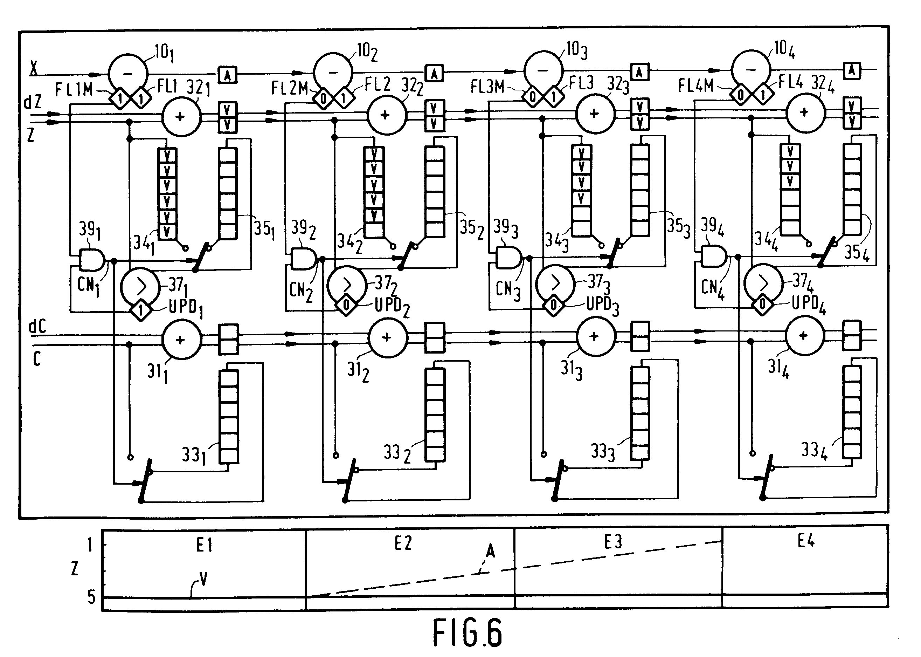

Pour illustrer dans un cas très simplifié le mécanisme de fonctionnement des moyens de traitement série de type pipeline, on a représenté sur les figures 6, 7 et 8 l'état de ces moyens a l'issue de trois étapes successives.

Considérons le traitement successif des quatre segments dans l'ordre suivant:

segment V $XM_o = 0$ $XN_o = 4$ $Z_o = 5$ $dZ_o = 0$
segment A $XM_o = 1$ $XN_o = 3$ $Z_o = 5$ $dZ_o = -2$
segment B $XM_o = 3$ $XN_o = 4$ $Z_o = 2$ $dZ_o = 0$
segment R $XM_o = 2$ $XN_o = 3$ $Z_o = 3$ $dZ_o = 0$

Pour simplifier l'illustration, $XM_o$ et $XN_o$ sont codés sur 3 bits et $Z_o$, $dZ_o$, $C_o$ et $dC_o$ sont codés sur 6 bits. Un cycle de base T, correspondant au temps de traitement d'un segment, comprend donc 6 périodes élémentaires d'horloge.

Chaque cellule élémentaire est affectée à un point-image. Ainsi la cellule élémentaire d'indice 2 est affectée au point-image E2. Les repères correspondants utilisés dans les schémas électriques précédents sont reportés sur ces illustrations.

Cycle T1

Le segment V est traité le premier. Les décrémenteurs $10_1$, $10_2$, $10_3$, $10_4$ opèrent sur $XM_o$ et $XN_o$, et les drapeaux $FL_1$, $FL_2$, $FL_3$, $FL_4$ se positionnent successivement à 1 puisque 4 points d'image sont concernés, et valident le segment V dans les cellules E1, E2, E3, E4 à l'issue du premier temps de cycle T1.
La figure 6 représente l'état à la fin du cycle T2 suivant relativement à la cellule E1.

Cycle T2

Les positionnements des drapeaux $FL_1$, $FL_2$, $FL_3$, $FL_4$ pour le segment V sont transférés progressive-ment dans les drapeaux $FL_1M$, $FL_2M$, $FL_3M$, $FL_4M$ qui conservent les positionnements qui vont être exploités avec un cycle de décalage.

A la fin du cycle T2 ce transfert aura été effectué pour la cellule 1, et l'on trouve ainsi la valeur $FL_1 = 1$ dans le drapeau $FL_1M$. Pour les autres cellules ce transfert ne va s'opérer que durant le cycle T3, où lors de chaque période élémentaire u les drapeaux $FL_kM$ seront progressivement remplis, et où les valeurs de $FL_k$ pour le segment A remplaceront alors les valeurs transférées vers $FL_kM$.

Les décrémenteurs opèrent sur le segment A et les valeurs $FL_1 = 0$, $FL_2 = 1$, $FL_3 = 1$, $FL_4 = 0$ sont déterminées. Le segment V ayant préalablement été validé, l'opération $Z_V + dZ_V$ est effectuée, et le résultat stocké dans les mémoires $34_1$, $34_2$, $34_3$, $34_4$. A l'issue du cycle T2 chacune des mémoires n'est encore qu'incomplètement chargée. Le résultat $Z_V + dZ_V$ est également présenté aux comparateurs $37_1$, $37_2$, $37_3$, $37_4$ qui vont progressivement comparer ces valeurs avec les valeurs (= valeurs de fond) stockées dans les registres de profondeur $35_k$ et engendrer les signaux $UPD_k$. Les signaux $UPD_k$ sont alors présentés aux portes ET $39_k$ pour former, avec les drapeaux $FL_k$, les signaux $CN_k$ qui détermineront alors la position des multiplexeurs à la sortie des registres $34_k$ et $35_k$.

Cycle T3

Les décrémenteurs opèrent sur le segment B. Les cellules E1, E2, E3 ne sont pas concernées. La cellule E4 est concernée. Les drapeaux $FL_1$, $FL_2$ et $FL_3$ sont position nés progressivement à 0 dans les cellules E1, E2 et E3, puis le drapeau $FL_4$ à 1 dans la cellule E4.

Le calcul $Z_A + dZ_A$ est effectué pour le segment A et comparé avec les valeurs $Z_V$ stockées dans les registres $35_2$ et $35_3$ des cellules E2 et E3, puisque pour le segment A uniquement le calcul dans les cellules E2 et E3 est validé. Les signaux $UPD_2 = 1$, $UPD_3 = 1$ sont engendrés.

Le calcul de $C_V + dC_V$ est effectué pour le segment V dans les cellules E1, E2, E3, E4. Puisque pour le segment V les différents drapeaux $FL_k$ avaient la valeur 1 et puisque les différents signaux $CN_k$ étaient également 1, les valeurs $C_V + dC_V$ seront stockées dans les mémoires $33_k$.

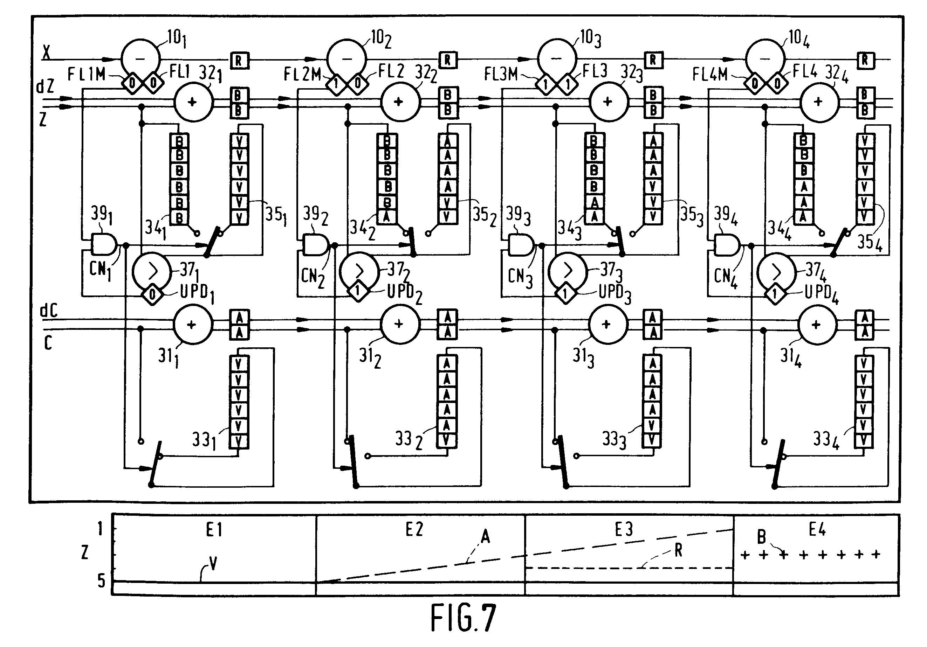

La figure 7 représente l'état à la fin du cycle T4 suivant relativement à la cellule E1.

Cycle T4

Les positionnements des drapeaux FL sont transférés progressivement aux drapeaux FL.M

Les décrémenteurs opèrent sur le segment R ($FL_1 = FL_2 = FL_4 = 0$; $FL_3 = 1$). Dans les cellules E2 et E3 les drapeaux $FL_2M$ et $FL_3M$ et les drapeaux UPD2 et UPD3 étant positionnés à 1, $CN_2$ et $CN_3$ sont également positionnés à 1 et ils commandent les multiplexeurs afin de substituer dans les cellules $E_2$ et $E_3$ $Z_V$ du segment V par $Z_A$ du segment A car $Z_A$ est inférieur à $Z_V$.

Le calcul $Z_B + dZ_B$ est effectué pour le segment B dans la cellule E4.

Le calcul $C_A + dC_A$ est effectué dans les cellules E2 et E3 car $FL_2M$ et $FL_3M$ sont positionnés à 1 (cellules concernées par ce segment). $FL_1M$ et $FL_4M$ sont positionnés à 0. L'addition n'est donc pas faite, mais on effectue la mise à jour dans les cellules E2 et E3 car $CN_2$ et $CN_3$ sont positionnés à 1.

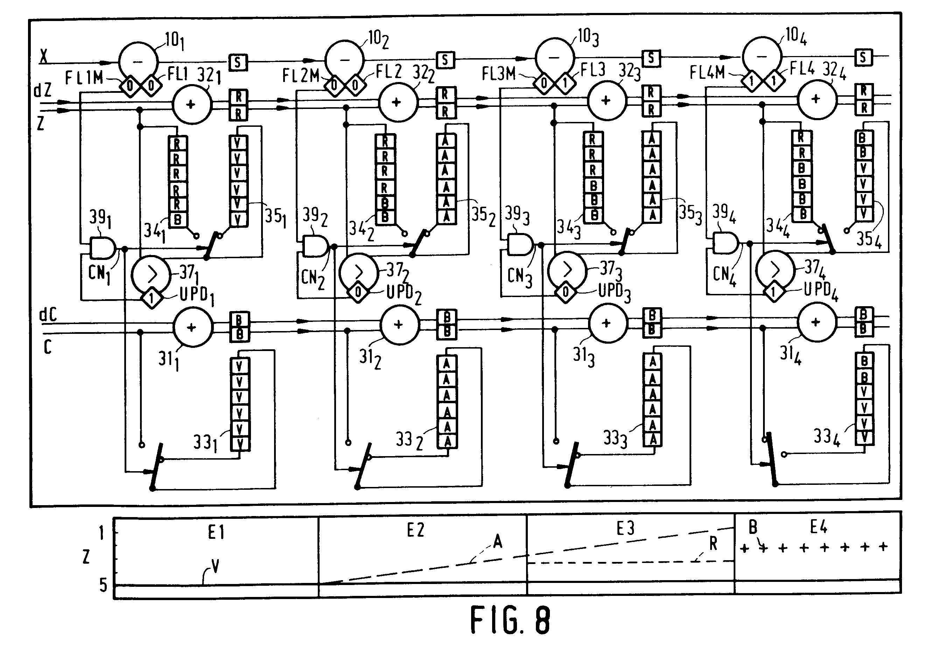

La figure 8 représente l'état à la fin du cycle T5 suivant relativement à la cellule E1.

Cycle T5

- Les décrémenteurs traitent un segment S suivant,
- $Z_B$ remplace Z stocké dans la cellule E4. Z stockés des cellules E1, E2, E3 sont bouclés sur eux-mêmes
- $Z_R$ est comparé avec Z stocké déterminé par la position des multiplexeurs,
- pas de mise à jour des attributs dans les cellules E1, E2, E3 (bouclage des registres sur eux-mêmes) car le segment B ne concerne pas ces cellules,
- mise à jour progressivement de $C_B$ dans la cellule E4.

Du fait du fonctionnement en mode pipeline les mémoires sont incomplètement remplies à la fin de chacun de ces cycles et l'opération ne se termine qu'au cours des cycles suivants.

On a maintenant décrit les moyens de traitement série, de type pipeline, auxquels sont fournis des paramètres de polygones préalablement convertis selon des paramètres d'un ensemble de segments ($M_O$, $N_O$).

Un logiciel effectuant cette conversion est défini selon la procédure suivante :

Logiciel de génération de segments.

Initialisation :

. Pour chaque polygone :
- Calculer dZ;
. Pour chaque arête, par exemple l'arête q allant du point A au point D :
- Calculer

$$LY_q = Y_D - Y_A$$
$$IX_q = (X_D - X_A)/LY_q, \quad IZ_q = (Z_D - Z_A)/LY_q$$
$$IC_q = (C_D - C_A)/LY_q;$$

On effectue les mêmes opérations pour toutes les arêtes.
- Déterminer le Y minimum du polygone = Ymin et la première arête rencontrée à partir du point A en tournant dans un sens donné :

$$XM_O = X_A, \quad ZM_O = Z_A, \quad IXM_O = IX_q, \quad IZM_O = IZ_q, \quad ICM_O = IC_q, \quad LYM_O = LY_q, \quad XN_O = X_A, \quad ZN_O = Z_A,$$
$$IXN_O = IX_{q-1}, IZN_O = IZ_{q-1}, ICN_O = IC_{q-1}, LYN_O = LY_{q-1};$$

En appelant q-1 l'arête placée avant l'arête q en choisissant pour le sens donné, le sens des aiguilles d'une montre.
- Initialiser à zéro la liste des polygones interceptant la ligne de visualisation ce qui donne la liste active;

Calcul des segments :

. Pour chaque ligne de visualisation tel que Y = LB :
- Pour chaque polygone avec Ymin = LB :
. entrer le polygone dans la liste active.
- Pour tous les polygones de la liste active :
. Décrémenter LY des arêtes droite et gauche :

$$LYM_O = LYM_O - 1, \quad LYN_O = LYN_O - 1$$

. Ajouter les incréments de droite et gauche pour X, Z et C
. Sortie du segment :

$$XM_O, XN_O, ZM_O, dZ$$
$$CM_O, INC = (CM_O - CN_O)/(XM_O - XN_O).$$

. Si $LYM_O = 0$

$LYN_O = 0$ sortie du polygone de la liste active
$LYN_O \neq 0$ arête gauche = arête suivante mise à jour des incréments gauches.

. Si $LYM_O \neq 0$

$LYN_O = 0$ arête droite = arête précédente mise à jour des incréments de droite.

Les moyens de conversion sont alors constitués du logiciel opérant sur un ordinateur, un microordinateur ou un microprocesseur qui opère également le stockage des données de base. Les moyens de traitement série de type pipeline sont alors réunis, par exemple sous la forme d'un circuit intégré, et constituent alors le processeur d'images selon l'invention. Il est alors connecté à un processeur de visualisation qui fournit l'image restituée.

On va maintenant décrire les moyens de conversion qui sont constitués d'un circuit de conversion de paramètres de polygones en paramètres de segments. Celui-ci peut constituer un circuit indépendant sous la forme par exemple d'un circuit intégré. Le processeur d'images comprend alors des moyens de traitement série, de type pipeline, et ledit circuit de conversion qui reçoit ses données de base d'une mémoire d'images qui stocke les paramètres des polygones.

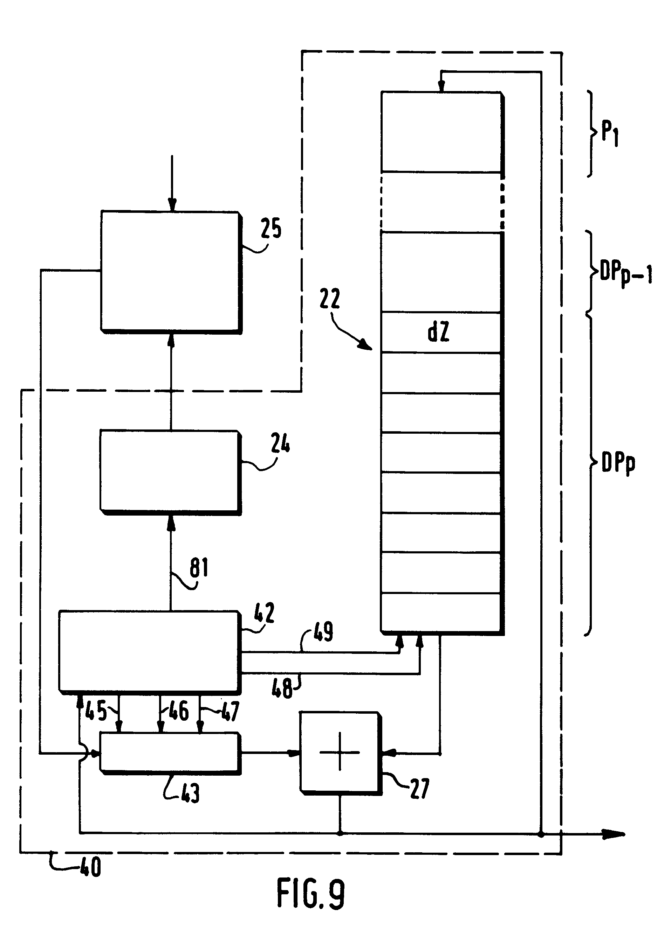

La figure 9 représente le schéma-bloc des moyens de conversion constitués d'un circuit de conversion 40. Ils comprennent un additionneur 27 qui reçoit sur une entrée la sortie d'un registre d'entrée 43 et sur l'autre entrée la sortie d'une mémoire circulante 22 qui reçoit sur son entrée la sortie de l'additionneur 27. La mémoire circulante 22 peut être constituée d'un registre à décalagé afin d'opérer en synchronisme avec les moyens de traitement série de type pipeline. Elle stocke les informations DPp relatives à chaque polygone $P_p$ interceptés par la ligne de visualisation. Le registre d'entrée 43 reçoit les paramètres des polygones à partir d'une mémoire d'image 25 chargée préalablement de l'extérieur. Le chargement du registre d'entrée 43 est contrôlé par un circuit de commande et de test 42 qui contrôle le fonctionnement du circuit de conversion ainsi que les appels de lecture de la mémoire d'images à travers un séquenceur 24.

Les paramètres des polygones sont stockés dans la mémoire d'images par exemple avec la nature et l'ordonnancement des paramètres indiqués sur le tableau 1 précédent. A l'aide des commandes (RAZO) 47 et (RAZ) 48, le registre d'entrée 43 et la mémoire circulante 22 sont mis à zéro afin d'initialiser le chargement des données. La commande (LOAD) 45 effectue le chargement du registre d'entrée 43. Pour cela le séquenceur 24 reçoit une commande 81 du circuit de test et de commande 42 ce qui va provoquer la lecture de données dans la mémoire d'image. Ces données seront transmises à travers le registre d'entrée 43 et l'additionneur 27 vers la mémoire circulante 22 qui va ainsi être chargée avec dZ, $CM_O$, $XM_O$, LYd, $ZN_O$, $CN_O$, $XN_O$, LYg du polygone Pp. Cette mémoire 22 fonctionnant dans une boucle il y a lieu de lui donner une taille suffisante mais non excessive afin de ne pas allonger la durée du traitement. Avec le nombre de paramètres sélectionnés pour chaque polygone tels que ceux indiqués sur le tableau 1, la possibilité de stocker 32 polygones est une dimension acceptable. Elle permet un traitement en temps réel.

Le fonctionnement du circuit de conversion 40 nécessite, à chaque cycle, d'effectuer les opérations suivantes:

- extraction, par décalage, d'un mot de données de la mémoire circulante 22 et chargement de son entrée par la sortie de l'additionneur 27,
- chargement du registre d'entrée 43 par les données IX, IZ, IC, lues en mémoire d'images, non chargées dans la mémoire 22,
- génération de l'adresse de la donnée suivante à lire en mémoire d'images,
- addition des sorties de la mémoire 22 et du registre 43.

On effectue ainsi les additions, et les transferts $X \leftarrow X + IX$, $Z \leftarrow Z + IZ$, $C \leftarrow C + IC$, $LY \leftarrow LY$-1 où le symbole $\leftarrow$ indique que la nouvelle valeur $(X + IX)$ remplace l'ancienne valeur X. La décrémentation de une unité de la longueur de l'arête peut se faire aisément en positionnant la sortie du registre d'entrée 43 sur la valeur -1 à l'aide de la commande CONS 46.

Le paramètre dZ d'un polygone est une constante pour chaque polygone et ne doit subir aucune modification. Néanmoins, pour des questions de simplification de traitement elle est introduite dans les paramètres des polygones, mais son passage dans' l'additionneur 27 ne l'altère pas en positionnant la sortie du registre' d'entrée 43 à zéro à l'aide de la commande RAZ 47. Le circuit de commande et de test 42 effectue le test de la longueur des arêtes droites et gauches des polygones. Lorsqu'après traitement la longueur LY circulante atteint la valeur zéro, l'arête concernée a fini d'être exploitée et doit être remplacée par l'arête suivante si le polygone n'a pas fini d'être traité, ou par un nouveau polygone dans le cas inverse.

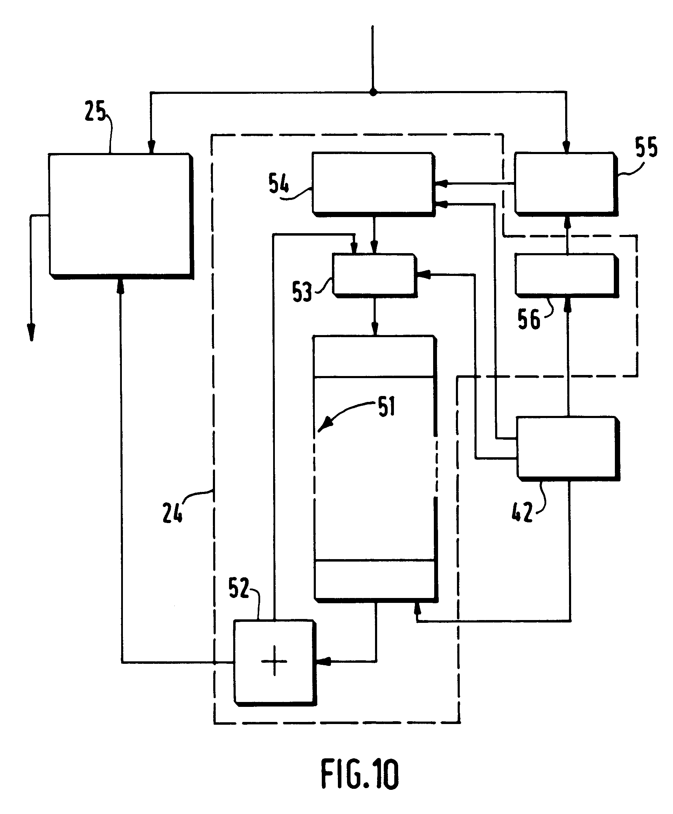

Le séquenceur 24 est représenté plus en détail sur la figure 10. Il génère les adresses des données qu'il faut aller lire dans la mémoire d'images 25. Pour cela il faut stocker dans un registre d'adresses 51 les informations suivantes :

- adresse absolue du polygone
- numéro de l'arête gauche Ng
- nombre d'arêtes gauches Narg
- numéro de l'arête droite Nd
- nombre d'arêtes droites Nard
- des drapeaux indiquant l'état du polygone.

Ces drapeaux sont, par exemple :

- PA = 0 si le polygone est inactif, c'est-à-dire que le polygone n'est pas intercepté par la ligne de visualisation.
- DP = 0 si le prochain passage dans les moyens de conversion du polygone correspond à la phase d'initialisation.
- Dg = 0 (respectivement Dd = 0) si le prochain passage dans les moyens de conversion du polygone correspond à une phase de changement d'arête gauche (respectivement d'arête droite).

La façon la plus simple pour disposer de ces informations est de les conserver dans un registre d'adresses 51 semblable à la mémoire circulante 22 de données, et qui peut être mis à jour pour un changement de polygone ou d'arête. Pour cela un multiplexeur 53 sélectionne la sortie d'une pile d'entrée 54 ou celle d'un additionneur 52 sous le contrôle du circuit de commande et de test 42. Le séquencement des opérations se fait de la manière suivante.

Un compteur de lignes 56 est incrémenté à chaque ligne. On charge dans la pile d'entrée 54 les adresses des polygones commençant à cette ligne. Ces adresses sont générées de façon externe dans le générateur 55 qui reçoit des instructions d'une unité centrale. On fait un décalage sur le registre d'adresses 51 toutes les 8 périodes élémentaires d'horloge, ce qui correspond aux 8 opérations suivantes du traitement du polygone :

$$LYg \leftarrow LYg - 1$$
$$Xg \leftarrow Xg + dXg$$
$$Zg \leftarrow Zg + dZg$$
$$Cg \leftarrow Cg + dCg$$
$$LYd \leftarrow LYd - 1$$
$$Xd \leftarrow Xd + dXd$$
$$Cd \leftarrow Cd + dCd$$
$$dZ \leftarrow dZ + 0.$$

Donc toutes les 8 périodes élémentaires d'horloge u, ce qui correspond à la détermination des paramètres du segment déterminé par l'intersection du polygone avec la ligne de visualisation, une nouvelle adresse de

14

polygone est présentée en sortie du registre 51 pour traiter le polygone suivant. Le séquenceur d'adresses 24 génère alors les adresses des différentes données recherchées en mémoire d'image. Cette séquence d'adresses est liée aux valeurs des drapeaux PA, DP, Dg, Dd. Ces données lues sont alors envoyées dans le registre d'entrée 43.

Suivant les résultats des tests effectués sur LYg et LYd, on recharge au prochain décalage, sur le registre d'adresse 51, les nouvelles adresses qui sont utiles au passage suivant, de la façon suivante :

- Lorsque PA = 0 (polygone inactif) ou lorsque LYg = 0 et Ng = Narg (détection d'une fin de polygone) et si la pile d'entrée 54 n'est pas vide (donc il y a un polygone commençant à la ligne suivante), on charge l'adresse de ce nouveau polygone dans le registre d'adresses 51 et on positionne les drapeaux à PA = 1 (polygone actif) et à DP = 0 initialisation),
- Lorsque LYg = 0 ou LYd = 0 et Ng différent de Narg (détection d'une fin d'arête), on incrémente Ng (ou Nd) et on positionne Dg à zéro (ou Dd à 0),
- Lorsque rien n'est détecté, les drapeaux restent inchangés.

Les différents signaux de commande effectuant cette procédure sont générés par une structure de commandes microprogrammée.

Le mot d'adresses stocké dans le registre 51 pour chaque polygone présente tout d'abord un premier champ constitué de APp, Narg, Ng, Nard, Nd, (APp indice du polygone) qui permet de générer les adresses des données et un second champ constitué de PA, DP, Dd, Dg qui indiquent l'état du polygone. Ce registre 51 stocke un mot d'adresse par polygone ayant la composition :

| APj | Narg | Ng | Nard | Nd | PA | DP | Dd | Dg |
|-----|------|-----|------|-----|-----|-----|-----|-----|

Il faut donc 32 mots de ce type pour une capacité de traitement de 32 segments par ligne.

Pour accroître les performances de traitement, plusieurs processeurs peuvent être utilisés en parallèle. Pour cela chaque processeur délivre non seulement les paramètres C, mais également les paramètres Z, en traitant simultanément et séparément deux ensembles de segments relatifs à la même ligne de visualisation. Une comparaison des paramètres Z permet de faire une sélection de la couleur à afficher.

Il est également possible de travailler avec 2 niveaux de pipeline en déterminant la valeur à l'origine Zorg telle que le segment MoNo intercepte l'axe OZ. Il est alors possible de calculer Zorg + dZ pour chaque valeur de $X_k$ et de valider la comparaison sous le contrôle du signal $FL_k$.

Pour traiter la transparence, on peut affecter un drapeau de transparence à un segment qui intervient sur les signaux $CN_k$ pour inhiber, par exemple un coup d'horloge sur deux, la mise à jour des paramètres $Z_k$ et $C_k$ du segment transparent.

## Revendications

1. Processeur d'images pour former une image bidimensionnelle d'objets tridimensionnels vu d'un angle d'observation déterminé, processeur comportant:
   - des moyens pour introduire des paramètres de polygone définissant un ensemble de polygones convexes par rapport à un espace de référence, ensemble de polygones qui représente un ou plusieurs objets tridimensionnels;
   - des moyens pour déduire, à partir des paramètres de polygone, des paramètres d'éléments d'image formant une image bidimensionnelle d'un objet dans un plan de visualisation, plan de visualisation qui est fixé en fonction de l'angle d'observation par rapport à l'espace de référence; et
   - des moyens pour sélectionner les éléments d'image les plus rapprochés du plan de visualisation et pour stocker de paramètres de ceux-ci,
   caractérisé en ce que,
   - les moyens pour déduire des paramètres d'éléments d'image sont réalisés sous la forme d'une pipeline pour déterminer ces paramètres d'éléments d'image en série, à partir de paramètres définissant une intersection d'un polygone avec un plan de balayage;
   - ces moyens étant conçus pour recevoir des paramètres définissant des intersections d'un polygone avec un ensemble de plans de balayage, plans de balayage qui s'étendent parallèlement les uns aux autres et sensiblement transversalement au plan de visualisation compris dans l'espace de référence, sous la forme d'au moins les points terminaux des intersections dans une seule coordonnée et de la valeur et de la variation, dans les limites des intersections, de la distance par rapport au plan de visualisation.

2. Processeur d'images selon la revendication 1, caractérisé en ce que, les moyens pour introduire des paramètres de polygone sont conçus pour recevoir un ensemble de segments sous la forme de coordonnées d'extrémités $XM_O$, $XN_O$, de coordonnées et d'incréments de profondeur $Z_O$ et $dZ_O$ et de paramètres et d'incréments d'attributs $C_O$ et $dC_O$ relatifs à chaque segment, lesdits paramètres de segments sont introduits bit à bit dans les moyens de traitement série de type pipeline.

3. Processeur d'images selon la revendication 1, caractérisé en ce que, les moyens pour introduire des paramètres de polygone sont conçus pour recevoir un ensemble de segments sous la forme de coordonnées d'extrémités $XM_O$, $XN_O$, de coordonnées et d'incréments de profondeur $Z_O$ et $dZ_O$ et de paramètres et d'incréments d'attributs $C_O$ et $dC_O$ relatifs à chaque segment, lesdits paramètres de segments sont introduits par groupes de bits dans les moyens de traitement série de type pipeline.

4. Processeur d'images selon une des revendications 1 ou 2, caractérisé en ce que les moyens pour introduire des paramètres de polygone sont conçus pour recevoir un ensemble de segments sous la forme de coordonnées d'extrémités $XM_O$, $XN_O$, de coordonnées et d'incréments de profondeur $Z_O$ et $dZ_O$ et de paramètres et d'incréments d'attributs $C_O$ et $dC_O$ relatifs à chaque segment, les moyens de traitement série de type pipeline comprennent n blocs, affectés chacun au traitement série des paramètres d'un des n éléments d'image d'une ligne de visualisation, le k-ième bloc comprenant (avec $1 \leq k \leq n$) :
   - un décrémenteur recevant les coordonnées $(XM_{k-1}, XN_{k-1})$ qu'il décrémente d'une unité binaire tel que :

   $$XM_k = XM_{k-1}\text{-}1, \ XN_k = XN_{k-1}\text{-}1,$$

   - un organe de validation qui reçoit respectivement les signes $(SM_k, SN_k)$ des résultats $(XM_k, XN_k)$ délivrés par le décrémenteur, et détermine un signal de validation $FL_k$ tel que :
   $FL_k = SM_k.\overline{SN_k}$ (le symbole (.) désignant l'opération logique ET), avec $FL_k = 1$ si l'élément d'image analysé est concerné par les coordonnées $(XM_k, XN_k)$, et $FL_k = 0$ dans le cas inverse,
   - une celllule de base,
     - qui reçoit les paramètres $Z_{k-1}$, $dZ_{k-1}$, $C_{k-1}$, $dC_{k-1}$, et le signal $FL_k$,
     - qui détermine, sous le contrôle du signal $FL_k = 1$, les paramètres $Z_k$, $C_k$, $dZ_k$, $dC_k$ pour la cellule de base suivante,
     - qui compare les paramètres $Z_{k-1}$ à des valeurs anciennes stockées $Zc_k(\text{ancienne})$ et stocke des valeurs $Zc_k(\text{nouvelle})$ tel que :

       $Zc_k(\text{nouvelle}) = Zc_k(\text{ancienne})$ si
       $Z_{k-1} \geqq Zc_k(\text{ancienne})$
       et $Zc_k(\text{nouvelle}) = Z_{k-1}$ si $Z_{k-1} < Zc_k(\text{ancienne})$

     - qui stocke les attributs $C_{k-1}$ associés aux nouvelles valeurs stockées $Zc_k$,
     - qui transmet les attributs $C_{k-1}$ à un bus externe.

5. Processeur selon l'une des revendications 1 à 4, caractérisé en ce qu'il comporte en outre des moyens pour déterminer des paramètres définissant les intersections d'un polygone avec un ensemble de plans de balayage qui s'étendent parallèlement les uns aux autres et sensiblement transversalement à un plan de visualisation compris dans un espace de référence.

6. Processeur d'images selon la revendication 5, caractérisé en ce que les paramètres des polygones lui étant fournis sous la forme de coordonnées et d'attributs de sommets et de paramètres d'arêtes des polygones, stockés dans une mémoire d'images, les moyens de conversion comprennent :
   - un additionneur qui reçoit sur une entrée la sortie d'un registre d'entrée et sur l'autre entrée la sortie d'une mémoire circulante,

- la mémoire circulante, étant reliée à la sortie de l'additionneur et ayant une capacité pour stocker les paramètres des polygones interceptés par la ligne de visualisation considérée,
- un circuit de test et de commande contrôlant le résultat issu de l'additionneur, et délivrant des signaux de commande, lorsque les coordonnées des extrémités des arêtes ont été atteintes, à la mémoire circulante, au registre d'entrée et à un séquenceur,
- le registre d'entrée recevant les paramètres des polygones d'une mémoire d'images,
- le séquenceur, commandé par le circuit de test et de commande, contrôlant la lecture des données de la mémoire d'images,

la sortie de l'additionneur délivrant des données comprenant les coordonnées d'extrémités $XM_O$, $XN_O$, les coordonnées et les incréments de profondeur $Z_O$ et $dZ_O$, les paramètres et les incréments d'attributs $C_O$ et $dC_O$ relatifs à chaque segment.

7. Processeur d'images selon la revendication 6, caractérisé en ce que le séquenceur comprend :
- un registre d'adresses contenant les adresses pour adresser dans la mémoire d'images les polygones en cours de traitement, ledit registre étant géré par le circuit de test et de commande,
- une pile d'entrée stockant les adresses des paramètres des polygones à introduire, gérée par le circuit de test et de commande,
- un additionneur incrémentant l'adresse délivrée par la sortie du registre d'adresses et fournissant des adresses incrémentées pour adresser la mémoire d'image, ces adresses incrémentées étant réintroduites à l'entrée d'un multiplexeur qui sélectionne ces adresses incrémentées ou de nouvelles adresses contenues dans la pile d'entrée, sous le contrôle du circuit de test et de commande afin de remplacer, par un nouveau polygone, un polygone qui a cessé d'être intercepté par la ligne de visualisation.

8. Processeur d'images selon les revendications 4 à 7, caractérisé en ce que le fonctionnement du processeur s effectue sur une suite de cycles T comprenant chacune des unités de temps u, formées par une horloge H, tel que T = a.u (a entier, longueur du mot), et en ce que les $\underline{n}$ cellules de base comprennent, pour la k-ième cellule de base avec $1 \leq k \leq n$ :
- une bascule d'entrée qui valide, sur l'horloge H, les signaux $Z_{k-1}$, $dZ_{k-1}$, $C_{k-1}$, $dC_{k-1}$, et un signal $OE_{k-1}$ de fin d'exploration de la ligne de visualisation,
- un additionneur qui détermine le paramètre $Z_k$ tel que :

$$Z_k = Z_{k-1} + dZ_k \text{ si } FL_k = 1$$
$$Z_k = Z_{k-1} \text{ si } FL_k = 0,$$

- un registre temporaire qui stocke la valeur $Z_{k-1}$
- un registre de profondeur qui stocke la valeur nouvelle $Zc_k$ affectée à chaque point-image, tel que

$$Zc_k(\text{nouvelle}) = Zc_k(\text{ancienne}) \text{ si } Z_{k-1} \geq Zc_k(\text{ancienne})$$
$$\text{et } Zc_k(\text{nouvelle}) = Z_{k-1} \text{ si } Z_{k-1} < Zc_k(\text{ancienne}),$$

- un multiplexeur qui oriente, sous le contrôle d'un signal $CN_k$, la sortie du registre de profondeur vers un comparateur lorsque $CN_k = 0$, et la sortie du registre temporaire vers l'entrée du registre de profondeur lorsque $CN_k = 1$,
- le comparateur qui compare la valeur $Z_{k-1}$ présente à l'entrée de l'additionneur aux valeurs rafraîchies $Zc_k$ stockées dans le registre de profondeur, et qui délivre un signal de comparaison $UPD_k$ tel que :

$$UPD_k = 1 \text{ si } Z_{k-1} \text{ nouvelle} < Zc_k \text{ rafraîchie},$$

- une bascule qui stocke le signal de comparaison $UPD_k$,
- une porte logique ET qui délivre le signal

$$CN_k = FL_k . UPD_k$$

17

- un autre additionneur qui détermine un paramètre d'attribut $C_k$ tel que :

$$C_k = C_{k-1} + dC_{k-1} \text{ si } FL_k = 1$$

- un sélecteur, contrôlé par le signal $CN_k$, qui oriente vers un registre d'attribut, la valeur $C_{k-1}$ nouvelle si $Zc_k$(nouvelle) est différent de $Zc_k$(ancienne) et fait circuler l'ancienne valeur $C_{k-1}$ si $Zc_k$(nouvelle) est égale à $Zc_k$(ancienne),
- un circuit de sortie qui délivre les données $C_{k-1}$ vers un bus de sortie lorsque tous les segments de tous les polygogones ont été examinés,
- une bascule de sortie qui valide, sur l'horloge $\overline{H}$ inverse de l'horloge H, les signaux $Z_k$, $dZ_k$, $C_k$, $dC_k$ et $OE_k$ délivrés pour la cellule de base suivante.

9. Procédé mis en oeuvre dans un processeur d'images d'objets décrits en trois dimensions, ledit processeur possédant des moyens d'entrée de paramètres de polygones convexes descriptifs de ces objets dans un repère de visualisation, des moyens pour déterminer à partir des paramètres des polygones, les paramètres des éléments d'image d'une image bidimensionnelle transformée de cet objet représentée dans le plan de visualisation d'un dispositif de visualisation, des moyens pour sélectionner et mémoriser les paramètres de tous les éléments de l'image transformée les plus rapprochés du plan de visualisation, afin d'éliminer les faces cachées des objets, ceux-ci étant représentés sous un angle d'observation choisi parmi un ensemble d'angles, caractérisé en ce que le fonctionnement des moyens de traitement série s'effectuant sur une suite de périodes de base T comprenant chacune des unités de temps $\underline{u}$, formées par une horloge, tel que T = a.u (a entier, longueur du mot), et les moyens de traitement série comprenant n blocs, et les paramètres des polygones étant convertis en un ensemble de segments $(M_O, N_O)$ constitués par les intersections de l'ensemble des polygones avec chaque ligne de visualisation du dispositif de visualisation, les segments étant fournis sous la forme de coordonnées d'extrémités $XM_O$, $XN_O$, de coordonnées et d'incréments de profondeur $Z_O$ et $dZ_O$, et de paramètres et d'incréments d'attributs $C_O$ et $dC_O$ relatifs à chaque segment $(M_O, N_O)$, pour chaque bloc k (avec $1 \leq k \leq n$) :
    - on initialise le contenu de deux mémoires MT et MP avec les valeurs maximales ZT et $Zc_k$ qu'elles peuvent contenir,
    - on introduit successivement en série les coordonnées $XM_{k-1}$, $XN_{k-1}$ des extrémités d'un ensemble de segments dans un décrémenteur, qui soustrait, à chaque unité de temps $\underline{u}$, une unité binaire à la coordonnée $XM_{k-1}$ et à la coordonnée $XN_{k-1}$ de chaque segment,
    - on mémorise les signes des résultats $SM_k$, $SN_k$, des coordonnées $XM_k$, $XN_k$, obtenues après ces décrémentations,
    - on détermine un signal $FL_k = SM_k.\overline{SN_k}$
    - lorsque le signal $FL_k = 1$ on introduit la coordonnée et l'incrément de profondeur $Z_{k-1}$ et $dZ_{k-1}$ et le paramètre et l'incrément d'attribut $C_{k-1}$ et $dC_{k-1}$ dans une cellule de base du bloc qui détermine une valeur $Z_k$ et une valeur $C_k$ telles que :

$$Z_k = Z_{k-1} + dZ_{k-1} \quad C_k = C_{k-1} + dC_{k-1} \text{ si } FL_k = 1$$
$$Z_k = Z_{k-1} \quad C_k = C_{k-1} \text{ si } FL_k = 0$$

    - on charge la valeur $Z_{k-1}$ dans la mémoire MT afin que $ZT = Z_{k-1}$,
    - on compare, en commençant par l'élément binaire de poids faible, pour chaque unité de temps $\underline{u}$, chaque élément binaire de la valeur $Z_{k-1}$ à chaque élément binaire de la valeur $Zc_k$ contenue dans la mémoire MP et on génère un signal de comparaison $UPD_k$ tel que $UPD_k = 1$ si $Z_{k-1} < Zc_k$, et on détermine un signal $CN_k = FL_k . UPD_k$,
    - lorsque $CN_k = 1$
        - on remplace la valeur $Zc_k$ par la valeur $ZT = Z_{k-1}$ au cours de la période T,
        - on introduit la valeur $C_{k-1}$ dans un registre d'attribut,
    - lorsque $CN_k = 0$, on fait circuler les données $Zc_k$ de la sortie de la mémoire MP vers l'entrée de la même mémoire au cours d'un cycle de durée T,
        - on effectue simultanément ces mêmes étapes pour les n blocs successifs de sorte qu'un bloc donné k reçoit ses informations du bloc précédent (k-1) et les transmet au bloc suivant (k + 1), chaque bloc effectuant, à un instant donné, selon une procédure pipeline,

- la détermination des valeurs $XM_O$, $XN_O$ au cours du cycle $T_r$,
- la détermination et la mémorisation des données Z relatives au cycle antérieur $T_{r-1}$,
- la détermination et la mémorisation des données C relatives au cycle précédent $T_{r-2}$, et mise à jour du Z rafraîchi,
- on dispose toutes les informations Ck issues des k blocs, sur un bus de sortie, lorsque tous les segments ont été complètement explorés, ce qui nécessite un certain nombre de cycles T déterminé par le nombre de segments compris dans la ligne de visualisation considérée.

**10.** Circuit de conversion de paramètres de polygones en paramètres de segments pour un processeur d'images d'objets décrits en trois dimensions selon une des revendications 5 à 8, qui possède des moyens d'entrée de paramètres de polygones convexes descriptifs de ces objets dans un repère de visualisation, des moyens pour déterminer à partir des paramètres des polygones, les paramètres des éléments d'image d'une image bidimensionelle transformée de cet objet, représentée dans le plan de visualisation d'un dispositif de visualisation, des moyens pour sélectionner et mémoriser les paramètres de tous les éléments de l'image transformée les plus rapproches du plan de visualisation, afin d'éliminer les faces cachées des objets, ceux-ci étant représentés sous un angle d'observation choisi parmi un ensemble d'angles, caractérisé. en ce que les paramètres de m polygones Pm étant fournis au processeur d'images, sous la forme de coordonnées et d'attributs $\overline{de}$ sommets et de paramètres d'arêtes des polygones, stockés dans une mémoire d'images, le circuit de conversion comprend :

- un additionneur qui reçoit sur une entrée la sortie d'un registre d'entrée et sur l'autre entrée la sortie d'une mémoire circulante,
- la mémoire circulante ayant son entrée reliée à la sortie de l'additionneur et ayant une capacité pour stocker les paramètres des polygones interceptés par la ligne de visualisation considérée,
- un circuit de test et de commande contrôlant le résultat issu de l'additionneur, et délivrant des signaux de commande, lorsque les coordonnées des extrémités des arêtes ont été atteintes, à la mémoire circulante, au registre d'entrée et à un séquenceur,
- le registre d'entrée recevant les paramètres des polygones d'une mémoire d'images,
- le séquenceur, commandé par le circuit de test et de commande, qui contrôle la lecture des données de la mémoire d'image, et qui comprend :
- un registre d'adresses contenant les adresses pour adresser dans la mémoire d'images les polygones en cours de traitement, ledit registre étant géré par le circuit de test et de commande,
- une pile d'entrée stockant les adresses des paramètres des polygones à introduire, gérée par le circuit de test et de commande,
- un additionneur incrémentant l'adresse délivrée par la sortie du registre d'adresses et fournissant des adresses incrémentées dont certaines servent à adresser la mémoire d'image, ces adresses incrémentées étant réintroduites à l'entrée d'un multiplexeur qui sélectionne ces adresses incrémentées ou de nouvelles adresses contenues dans la pile d'entrée, sous le contrôle du circuit de test et de commande afin de remplacer, par un nouveau polygone, un polygone qui a cessé d'être intercepté par la ligne de visualisation.

**Claims**

**1.** An image processor for forming a two-dimensional image of three-dimensional objects viewed at a given angle of observation, which processor comprises:

- means for introducing polygon parameters defining a set of convex polygons relative to a reference space, said set of polygons representing one or more three-dimensional objects;
- means for determining, from polygon parameters, parameters of pixels forming a two-dimensional image of an object in a visualization plane which is fixed as a function of the observation angle relative to the reference space; and
- means for selecting the pixels which are closest to the visualization plane and for storing parameters thereof,

characterized in that

- the means for determining parameters of pixels are realized in the form of a pipeline for serial determination of these parameters of pixels on the basis of parameters defining an intersection of a polygon with a scanning plane;
- which means are conceived to receive parameters defining intersections of a polygon with a set of scanning planes, which planes extend parallel to one another and substantially transversely of the visualization plane contained in the reference space, in the form of at least the terminal points of intersections in a single coordinate and the value and the variation, within the limits of intersections, of the distance with respect to the visualization plane.

2. An image processor as claimed in Claim 1, characterized in that the means for introducing polygon parameters are conceived to receive a set of segments in the form of extremity coordinates $XM_0$, $XN_0$, depth coordinates and increments $Z_0$ and $dZ_0$, and attribute parameters and increments $C_0$ and $dC_0$ relating to each segment, said segment parameters being introduced bit by bit into the pipeline-type serial processing means.

3. An image processor as claimed in Claim 1, characterized in that the means for introducing polygon parameters are conceived to receive a set of segments in the form of extremity coordinates $XM_0$, $XN_0$, depth coordinates and increments $Z_0$ and $dZ_0$, and attribute parameters and increments $C_0$ and $dC_0$ relating to each segment, said segment parameters being introduced in groups of bits into the pipeline-type serial processing means.

4. An image processor as claimed in one of the Claims 1 or 2, characterized in that the means for introducing polygon parameters are conceived to receive a set of segments in the form of extremity coordinates $XM_0$, $XN_0$, depth coordinates and increments $Z_0$ and $dZ_0$, and attribute parameters and increments $C_0$ and $dC_0$ relating to each segment, the pipeline-type serial processing means comprising n blocks, each of which is allocated to the serial processing of the parameters of one of $\underline{n}$ pixels of a $\overline{\text{line}}$ of visualization, the k-th block comprising (with $1 \leq k \leq n$):
   - a decrementor receiving the coordinates ($XM_{k-1}$, $XN_{k-1}$) which it decrements by one binary unit so that: $XM_k = XM_{k-1}$-1, $XN_k = XN_{k-1}$-1;
   - a validation element which receives the signs ($SM_k$, $SN_k$) of the results ($XM_k$, $XN_k$) supplied by the decrementor, and determines a validation signal $FL_k$ such that $FL_k = SMk.\overline{SN}_k$ (the symbol (.)-designating the AND-logic operation), with $FL_k = 1$ if the pixel analyzed is affected by the coordinates ($XM_k$,$XN_k$), and with $FL_k = 0$ in the opposite case;
   - a basic cell:
   - which receives the parameters $Z_{k-1}$, $dZ_{k-1}$, $C_{k-1}$, $dC_{k-1}$, and the signal $FL_k$;
   - which determines, under the control of the signal $FL_k = 1$,the parameters $Z_k$, $C_k$, $dZ_k$, $dC_k$ for the subsequent basic cell;
   - which compares the parameters $Z_{k-1}$ with old stored values $Zc_k$ (old) and stores values $Zc_k$ (new) so that: $Zc_k(new) = Zc_k$ (old) if $Z_{k-1} \geq Zc_k$ (old) and $Zc_k$ (new) $= Z_{k-1}$ if $Z_{k-1} < Zc_k$ (old);
   - which stores the attributes $C_{k-1}$ associated with the new stored values $Zc_k$;
   - which transmits the attributes $C_{k-1}$ to an external bus.

5. A processor as claimed in one of the Claims 1 to 4, characterized in that it also comprises means for determining parameters defining the intersections of a polygon with a set of scanning planes which extend parallel to one another and substantially transversely of a visualization plane contained in a reference space.

6. An image processor as claimed in Claim 5, characterized in that the polygon parameters are applied thereto in the form of coordinates and attributes of apices and of parameters of edges of polygons, stored in an image memory, the conversion means comprising:
   - an adder which receives at one input the output from an input register and at the other input the output from a circulating memory,
   - the circulating memory, being connected to the output of the adder and having a capacity to store the parameters of polygons intersected by the line of visualization under consideration;
   - a test and command circuit controlling the result emerging from the adder, and supplying command signals, when the coordinates of the extremities of edges have been reached, to the circulating memory, to the input register, and to a sequencer;
   - the input register receiving the polygon parameters from an image memory;
   - the sequencer, controlled by the test and command circuit, controlling the reading of data from the image memory, the output of the adder supplying data comprising the extremity coordinates $XM_0$, $XN_0$, the depth coordinates and increments $Z_0$ and $dZ_0$, the attribute parameters and increments $C_0$ and $dC_0$ relating to each segment.

20

7. An image processor as claimed in Claim 6, characterized in that the sequencer comprises:
   - an address register which contains the addresses for addressing, in the image memory, the polygons in the course of processing, and which is controlled by the test and command circuit;
   - an input stack which stores the addresses of polygon parameters to be input and which is controlled by the test and command circuit;
   - an adder which increments the address supplied by the output of the address register and which supplies incremented addresses to address the image memory, which incremented addresses are reintroduced at the input of a multiplexer which selects these incremented addresses or new addresses contained in the input stack, under the control of the test and command circuit, in order to substitute a new polygon for a polygon which has ceased to be intersected by the line of visualization.

8. An image processor as claimed in the Claims 4 to 7, characterized in that the operation of the processor is implemented on a sequence of cycles T, each comprising units of time $\underline{u}$, generated by a clock H, so that T = a.u (a being an integer, the length of the word), and in that the $\underline{n}$ basic cells comprise, for the k-th basic cell with $1 \leq k \leq n$:
   - an input flip-flop which validates, in the clock H, the signals $Z_{k-1}$, $dZ_{k-1}$, $C_{k-1}$, $dC_{k-1}$, and a signal $OE_k$-1 indicating the end of exploration of the line of visualization,
   - an adder which determines the parameter $Z_k$ so that:

   $Z_k = Z_{k-1} + dZ_k$ if $FL_k = 1$
   $Z_k = Z_{k-1}$ if $FL_k = 0$,

   - a temporary register which stores the value $Z_{k-1}$
   - a depth register which stores the new value $Zc_k$ allocated to each pixel so that

   $Zc_k$ (new) = $Zc_k$ (old) if $Z_{k-1} \geq Zc_k$ (old) and $Zc_k$ (new) = $Z_{k-1}$ if $Z_{k-1} < Zc_k$ (old),

   - a multiplexer which directs, under the control of a signal $CN_k$, the output of the depth register to a comparator when $CN_k = 0$, and the output of the temporary register to the input of the depth register when $CN_k = 1$:
   - the comparator which compares the value $Z_{k-1}$ present at the output of the adder with the refreshed values $Zc_k$ stored in the depth register, and which supplies a comparison signal $UPD_k$ so that:

   $UPD_k = 1$ if $Z_{k-1}$ new < $Zc_k$ refreshed,

   - a flip-flop which stores the comparison signal $UPD_k$,
   - a logic AND-gate which supplies the signal $CN_k = FL_k.UPD_k$;
   - a further adder which determines an attribute parameter $C_k$ so that:

   $C_k = C_{k-1} + dC_{k-1}$ if $FL_k = 1$,

   - a selector, controlled by the signal $CN_k$, which directs the new value $C_{k-1}$ to an attribute register if $Zc_k$ (new) is different from $Zc_k$ (old) and which causes the old value $C_{k-1}$ to circulate if $Zc_k$ (new) is equal to $Zc_k$ (old),
   - an output circuit which applies the data $C_{k-1}$ to an output bus when all segments of all polygons have been examined;
   - an output flip-flop which validates, on the clock $\overline{H}$ which is the inverse of the clock H, the signals $Z_k$, $dZ_k$, $C_k$, $dC_k$ and $OE_k$ supplied for the subsequent basic cell.

9. A method carried out in a processor of images of objects described in three dimensions, said processor comprising input means for parameters of convex polygons describing the objects in a frame of visualization, means for determining, from polygon parameters, the parameters of pixels of a transformed two-dimensional image of such an object, which image is represented in the visualization plane of a display device, means for selecting and storing the parameters of all pixels of the transformed image which are closest to the visualization plane in order to eliminate the concealed faces of the objects, the latter being represented at an angle of observation selected from among a set of angles, characterized in that, the operation of the serial processing means taking place on a sequence of periods of base T, each comprising units of time u generated by a clock so that T = a.u (where a is an integer, the length of the word), and the serial processing means comprising n blocks, and the polygon parameters being converted into a set of segments $(M_0, N_0)$ constituted by the intersection of the set of polygons with each line of visualization of the display device, the segments being supplied in the form of extremity coordinates $XM_0$, $XN_0$, depth coordinates and increments $Z_0$ and $dZ_0$, and attribute parameters and increments $C_0$ and $dC_0$ relating to each segment $(M_0, N_0)$, for each block k (with $1 \leq k \leq n$):

- the content of two memories MT and MP is initialized with the maximum values ZT and $Zc_k$ which they can contain,
- the coordinates $XM_{k-1}$, $XN_{k-1}$ of the extremities of a set of segments are successively input in series into a decrementor which subtracts, for each unit of time u a binary unit from the coordinate $XM_{k-1}$ and the coordinate $XN_{k-1}$ of each segment,
- the signs of the results $SM_k$, $SN_k$, of the coordinates $XM_k$, $XN_k$, obtained after these decrementations, are stored,
- a signal $FL_k = SM_k.\overline{SN_k}$ is determined,
- when the signal $FL_k = 1$, the depth coordinate and increment $Z_{k-1}$ and $dZ_{k-1}$ and the attribute parameter and increment $C_{k-1}$ and $dC_{k-1}$ are input into a basic cell of the block which determines a value $Z_k$ and a value $C_k$ so that:

$$Z_k = Z_{k-1} + dZ_{k-1} \quad C_k = C_{k-1} + dC_{k-1} \text{ if } FL_k = 1$$
$$Z_k = Z_{k-1} \quad C_k = C_{k-1} \text{ if } FL_k = 0,$$

- the value $Z_{k-1}$ is loaded into the memory MT in order that $ZT = Z_{k-1}$,
- commencing with the least significant bit, for each unit of time u, each binary element of the value $Z_{k-1}$ is compared with each binary element of the value $Zc_k$ contained in the memory MP, and a comparison signal $UPD_k$ is generated so that $UPD_k = 1$ if $Z_{k-1} < Zc_k$, and a signal $CN_k = FL_k$. $UPD_k$ is determined,
- when $CN_k = 1$,
- the value $Zc_k$ is replaced by the value $ZT = Z_{k-1}$ in the course of the period T,
- the value $C_{k-1}$ is input into an attribute register,
- when $CN_k = 0$, the data $Zc_k$ from the output of the memory MP is circulated to the input of the same memory during a cycle of duration T;
- these same steps are carried out simultaneously for the n successive blocks in such a manner that a given block k receives its data from the preceding block (k-1) and transmits it to the subsequent block (k + 1), each block at a given instant performing according to a pipeline procedure:
- the determination of the values $XM_0$, $XN_0$ during cycle $T_r$,
- the determination and the storage of the data Z relating to the previous cycle $T_{r-1}$,
- the determination and the storage of the data C relating to the preceding cycle $T_{r-2}$, and updating of Z refreshed,
- all data $C_k$ from k blocks are applied to an output bus when all segments have been completely explored, requiring a given number of cycles T determined by the number of segments included in the line of visualization under consideration.

10. A circuit for the conversion of polygon parameters into segment parameters for a processor of images of objects described in three dimensions as claimed in one of the Claims 5 to 8, which processor comprises input means for parameters of convex polygons describing the objects in a frame of visualization, means for determining, from polygon parameters, the parameters of pixels of a transformed two-dimensional image of that object, which image is represented in the visualization plane of a display device, means for selecting and storing the parameters of all pixels of the transformed image which are closest to the visualization plane in order to eliminate the concealed faces of the objects, the latter being represented at an angle of observation selected from among a set of angles, characterized in that, the parameters of $\overline{m}$ polygons Pm being applied to the image processor in the form of coordinates and attributes $\overline{of}$ apices and parameters of edges of the polygons stored in an image memory, the conversion circuit comprises:

- an adder receives at one input the output from an input register and at the other input the output from a circulating memory,
- the circulating memory having its input connected to the output of the adder and having a capacity to store the parameters of the polygons intersected by the line of visualization under consideration,
- a test and command circuit which controls the result emanating from the adder, and which supplies command signals, when the coordinates of extremities of edges have been reached, to the circulating memory, to the input register, and to a sequencer,
- the input register receiving the polygon parameters from an image memory,
- the sequencer, commanded by the test and command circuit, which controls the reading of data from the image memory, and which comprises:
- an address register which contains the addresses for addressing in the image memory, the polygons in the course of processing, and which is controlled by the test and command circuit,
- an input stack which stores the addresses of polygon parameters to be input and which is controlled by the test and command circuit,
- an adder which increments the address supplied by the output of the address register and which supplies incremented addresses, some of which serve to address the image memory, which incremented addresses are reintroduced at the input of a multiplexer which selects these incremented addresses or new addresses contained in the input stack, under the control of the test and command circuit, in order to substitute a new polygon for a polygon which has ceased to be intersected by the line of visualization.

**Patentansprüche**

1. Bildprozessor zur Bildung eines zweidimensionalen Bildes von dreidimensionalen Objekten, von einem bestimmten Beobachtungswinkel aus gesehen, wobei der Prozessor folgende Elemente enthält:
    - Mittel zum Einführen von Polygonparametern, die eine Gruppe konvexer Polygone in bezug auf einen Bezugsraum definieren, wobei diese Polygongruppe eines oder mehrere dreidimensionalen Objekte darstellt,
    - Mittel zum Ableiten von Bildelementparametern, wobei von den Polygonparametern ausgegangen wird, und diese Bildelementparameter ein zweidimensionales Bild eines Objekts in einer Sichtebene bilden, die abhängig vom Sichtwinkel in bezug auf den Bezugsraum festgesetzt ist, und
    - Mittel zum Wählen der am nächsten bei der Sichtebene liegenden Bildelemente und zum Speichern der Parameter dieser Elemente,
    
    dadurch gekennzeichnet, daß
    - die Mittel zum Ableiten der Bildelementparameter mittels einer Pipeline verwirklicht werden, um diese Bildelementparameter serienweise zu bestimmen, ausgehend von Parametern, die eine Überschneidung eines Polygons mit einer Abtastebene definieren,
    - diese Mittel zum Empfangen der Parameter ausgelegt sind, die die Überschneidungen eines Polygons mit einer Gruppe von Abtastebenen, in Form wenigstens der Endpunkte der Überschneidungen in einer einzigen Koordinate und des Wertes und der Änderung, innerhalb der Begrenzungen der Überschneidungen, des Abstandes bezüglich der Visualisierungsebene definieren, wobei diese Abtastebenen zueinander parallel und im wesentlichen transversal zur Visualisierungsebene verlaufen, welche Visualisierungsebene sich im Bezugsraum befindet.

2. Bildprozessor nach Anspruch 1, dadurch gekennzeichnet, daß die Mittel zum Eingeben von Polygonparametern zum Empfangen einer Segmentgruppe in Form von Koordinaten $XM_o$, $XN_o$ von Koordinaten und Inkrementen der Tiefe $Z_o$ und $dZ_o$ und von Parametern und Attributinkrementen $C_o$ und $dC_o$ bezüglich jedes Segments ausgelegt sind, wobei die Segmentparameter in die seriellen Behandlungsmittel vom Pipelinetyp bitweise eingegeben werden.

3. Bildprozessor nach Anspruch 1, dadurch gekennzeichnet, daß die Mittel zum Eingeben von Polygonparametern zum Empfangen einer Segmentgruppe in Form von Koordinaten $XM_o$, $XN_o$, von Koordinaten und Inkrementen der Tiefe $Z_o$ und

$dZ_o$ und von Parametern und Attributinkrementen $C_o$ und $dC_o$ bezüglich jedes Segments ausgelegt sind, wobei die Segmentparameter in die seriellen Behandlungsmittel vom Pipelinetyp in Bitgruppen eingegeben werden.

4. Bildprozessor nach einem der Ansprüche 1 oder 2, dadurch gekennzeichnet, daß die Mittel zum Eingeben der Polygonparameter zum Empfangen einer Segmentgruppe in Form von Koordinaten $XM_o$, $XN_o$, von Koordinaten und Inkrementen der Tiefe $Z_o$ und $dZ_o$, und von Parametern und Attributinkrementen $C_o$ und $dC_o$ bezüglich jedes Segments ausgelegt sind, die seriellen Behandlungsmittel vom Pipelinetyp n Blöcke enthalten, die jeweils für die serielle Bearbeitung der Parameter von einem der n Bildelemente einer Visualisierungslinie bestimmt sind, wobei der k-te Block folgende Elemente enthält (bei $1 \leq k \leq n$):

- einen Dekrementor, der die Koordinaten ($XM_{k-1}$, $XN_{k-1}$) empfangt, zum Dekrementieren mit einer binären Einheit gemäß $XM_k = XM_{k-1}-1$, $XN_k = XN_{k-1}-1$,
- ein Auswertungsorgan, das die Vorzeichen ($SM_k$, $SN_k$) der Ergebnisse ($XM_k$, $XN_k$) aus dem Dekrementor empfängt und ein Auswertesignal $FL_k$ derart bestimmt, daß $FL_k = SM_k.SN_k$ ist, (wobei das Symbol (.) die logische UND-Bearbeitung ET angibt), wobei $FL_k = 1$ ist, wenn das analysierte Bildelement sich auf die Koordinaten ($XM_k$, $XN_k$) bezieht, und wenn $FL_k = 0$ im umgekehrten Fall ist,
- eine Basiszelle:
  - . die die Parameter $Z_{k-1}$, $dZ_{k-1}$, $C_{k-1}$, $dC_{k-1}$ und das Signal $FL_k$ empfängt,
  - . die unter der Steuerung des Signals $FL_k = 1$ die Parameter $Z_k$, $C_k$, $dZ_k$ $dC_k$ für die folgende Basiszelle bestimmt,
  - . die die Parameter $Z_{k-1}$ speichert, sie mit früheren gespeicherten Werten $Zc_k$ (früher) vergleicht und die Werte $Zc_k$(neu) derart speichert, daß

$$Zc_k \text{ (neu)} = ZC_k \text{ (früher) ist, wenn } Z_{k-1} \geq Zc_k \text{ (früher) ist,}$$
$$ZC_k \text{ (neu)} = Z_{k-1} \text{ ist, wenn } Z_{k-1} < Zc_k \text{ (früher),}$$

  - . die die Attribute $C_{k-1}$ speichert, die den neuen gespeicherten Werten $Zc_k$ zugeordnet sind,
  - . die die Attribute $C_{k-1}$ auf einen externen Bus überträgt.

5. Prozessor nach einem der Ansprüche 1 bis 4, dadurch gekennzeichnet, daß er außerdem Parameterbestimmungsmittel enthält, die die Überschneidungen eines Polygons mit einer Einheit von Abtastebenen definieren, die sich untereinander in paralleler Richtung und im wesentlichen quer zu einer in einem Bezugsraum enthaltenen Visualisierungsebene erstrecken.

6. Bildprozessor nach Anspruch 5, dadurch gekennzeichnet, daß dem Bildprozessor die Polygonparameter in Form von Koordinaten und Scheitelattributen und von Polygonkantenparamretern eingegeben werden, die in einem Bildspeicher gespeichert sind, wobei die Parameterbestimmungsmittel folgende Elemente enthalten:
- einen Addierer, der an einem Eingang das Ausgangssignal eines Eingangsregisters und am anderen Eingang das Ausgangssignal eines Umlaufspeichers empfängt,
- den Umlaufspeicher, der mit dem Addirererausgang verbunden ist und eine Kapazität zum Speichern der durch die betreffende Visualisierungszeile eingefangenen Polygonparameter hat,
- eine Prüf- und Steuerschaltung zum Steuern des vom Addierer ausgegebenen Ergebnisses und zum Ausgeben von Steuersignalen, wenn die Koordinaten der Kantenenden erreicht sind, an den Umlaufspeicher, an das Eingangsregister und an eine Ablaufsteuerung,
- das Eingangsregister zum Empfangen der Polygonparameter eines Bildspeichers,
- die Ablaufsteuerung, die von der Prüf- und Steuerschaltung zum Prüfen der Datenlesung des Bildspeichers gesteuert wird,
wobei der Addiererausgang die Daten mit den Endkoordinaten $XM_0$ und $XN_0$, mit den Tiefenkoordinaten und Tiefeninkrementen $Z_0$ und $dZ_0$, mit den Attributparametern und den Attributinkrementen $C_0$ und $dC_0$ für jedes Segment ausgibt.

7. Bildprozessor nach Anspruch 6, dadurch gekennzeichnet, daß die Ablaufsteuerung folgende Elemente enthält:

24

- ein Adreßregister mit den Adressen zum Adressieren der Polygone im Bildspeicher im Laufe der Bearbeitung, wobei das Register von der Prüf- und Steuerschaltung gesteuert wird,
- einen Eingangsstapel mit den gespeicherten Adressen der einzuführenden Polygonparameter, gesteuert von der Prüf- und Steuerschaltung,
- einen Addierer, der die vom Ausgang des Adreßregisters gelieferte Adresse inkrementiert und zum Adressieren des Bildspeichers die inkrementierten Adressen ausgibt, wobei diese inkrementierten Adressen in den Eingang eines Multiplexers neueingeführt werden, der diese inkrementierten Adressen oder neue Adressen im Eingangsstapel unter der Steuerung der Prüf- und Steuerschaltung wählt, um durch ein neues Polygon das Polygon zu ersetzen, das von der Visualisierungslinie nicht eingefangen werden konnte.

8. Bildprozessor nach einem der Ansprüche 4 bis 7, dadurch gekennzeichnet, daß die Wirkung des Prozessors auf einer Zyklusfolge T mit je u Zeiteinheiten erfolgt, die ein Taktgeber H derart bildet, daß T = a.u ist (a ganzzahlig, Wortlänge), und daß die n Basiszellen für die k-te Basiszelle bei $1 \leq k \leq n$ folgende Elemente enthalten:
- ein Eingangsflipflop, das beim Takt H die Signale $Z_{k-1}$, $dZ_{k-1}$, $C_{k-1}$, $dC_{k-1}$ und ein Signal $OE_{k-1}$ als Ende der Suche der Visualisierungslinie auswertet,
- einen Addierer, der den Parameter $Z_k$ derart bestimmt, daß

$Z_k = Z_{k-1} + dZ_k$ ist, wenn $FL_k = 1$ ist, und
$Z_k = Z_{k-1}$ ist, wenn $FL_k = 0$ ist,

- ein Zwischenregister, das den Wert $Z_{k-1}$ speichert,
- ein Tiefenregister, das den jedem Bildpunkt zugeordneten neuen Wert $Zc_k$ derart speichert, daß

$Zc_k$ (neu) = $Zc_k$ (früher) ist, wenn $Z_{k-1} \geq Zc_k$ (früher), und $Zc_k$ (neu) = $z_{k-1}$ ist, wenn $Z_{k-1} < Zc_k$ (früher) ist,

- einen Multiplexer, der unter der Steuerung eines Signals $CN_k$ den Ausgang des Tiefenregisters auf einen Komparator richtet, wenn $CN_k = 0$ ist, und den Ausgang des Zwischenregisters auf den Eingang des Tiefenregisters richtet, wenn $CN_k = 1$ ist,
- den Komparator, der den Wert $Z_{k-1}$ am Eingang des Addierers mit den aktualisierten, im Tiefenregister gespeicherten Werten $Zc_k$ vergleicht, und ein Vergleichssignal $UPD_k$ derart ausgibt, daß
$UPD_k = 1$ ist, wenn $Z_{k-1}$ neu $< Zc_k$ aktualisiert ist,
- ein Flipflop, das das Vergleichssignal $UPD_k$ speichert,
- ein logisches UND-Gatter ET, das das Signal $CN_k = FL_k.UPD_k$ ausgibt,
- einen weiteren Addierer, der ein Attributparameter $C_k$ derart bestimmt, daß

$C_k = C_{k-1} + dC_{k-1}$ ist, wenn $FL_k = 1$ ist,

- einen vom Signal $CN_k$ gesteuerten Wähler, der den neuen Wert $C_{k-1}$ auf ein Attributregister richtet, wenn $Zc_k$ (neu) von $Zc_k$ (früher) abweicht, und den früheren Wert $C_{k-1}$ umlaufen läßt, wenn $Zc_k$ (neu) gleich $Zc_k$ (früher) ist,
- eine Ausgangsschaltung, die die Daten $C_{k-1}$ einem Ausgangsbus zuführt, wenn alle Segmente aller Polygone geprüft sind,
- ein Flipflop, das beim Takt H als invertiertem Wert des Taktes H die für die folgende Basiszelle gelieferten Signale $Z_k$, $dZ_k$, $C_k$, $dC_k$ und $OE_k$ auswertet.

9. Anwendungsverfahren für dreidimensionale Objekte in einem Bildprozessor, der Eingangsmittel für beschreibende konvexe Polygonparameter dieser Objekte in einem Visualisierungs-Bezugspunkt, Mittel zum Bestimmen der Parameter von Bildelementen eines zweidimensionalen umgeformten Bildes dieses Objekts in der Visualisierungsebene einer Visualisierungsanordnung ausgehend von Polygonparametern, Mittel zum Wählen und Speichern der Parameter aller Elemente des nächst zur Visualisierungsebene liegenden umgeformten Bildes zum Beseitigen der versteckten Flächen des Objekts enthält, die unter einem aus einer Gruppe von Winkeln ausgewählten Sichtwinkel dargestellt werden, dadurch gekennzeichnet, daß die Wirkung der seriellen Bearbeitungsmitel bei einer Basisperiodenfolge $\overline{T}$ mit je u Zeiteinheiten erfolgt, die ein Taktgeber derart bildet, daß T = a.u ist (a ganzzahlig, Wortlänge), wobei die seriellen Bearbeitungsmittel n Basiszellen enthalten, die Polygonparameter in eine Segmentgruppe ($M_0$, $N_0$) umgewandelt werden, welche Segmentgruppe aus den Überschneidungen der Polygongruppe mit jeder Visualisierungslinie der Visualisierungsanordnung besteht, und die Segmente in Form von Endenkoordinaten $XM_0$, $XN_0$, von Tiefenkoordinaten und Tiefenparametern $Z_0$ und $dZ_0$ und von Attributparametern und Attributinkrementen $C_0$ und $dC_0$ bezüglich jeden Segments ($M_0$, $N_0$) für jeden Block k (bei $1 \leq k \leq n$) geliefert werden:

- die Inhalte von zwei Speicher MT und MP werden mit den Höchstwerten ZT und $Zc_k$ eingeleitet, die sie enthalten können,
- aufeinanderfolgend werden seriell die Koordinaten $XM_{k-1}$, $XN_{k-1}$ der Enden einer Segmentgruppe in einen Dekrementor eingeführt, der in jeder Zeiteinheit u eine Binäreinheit von der Koordinate $XM_{k-1}$ und von der Koordinate $XN_{k-1}$ jedes Segments abzieht,
- die nach diesen Dekrementierungen erhaltenen Ergebnissignale $SM_k$, $SN_k$ der Koordinaten $XM_k$, $XN_k$ werden gespeichert,
- ein Signal $FL_k = SM_k \cdot \overline{SN_k}$ wird bestimmt,
- wenn das Signal $FL_k = 1$ ist, werden die Tiefenkoordinate und das Tiefeninkrement $Z_{k-1}$ und $dZ_{k-1}$ sowie der Attributparameter und das Attributinkrement $C_{k-1}$ und $dC_{k-1}$ in eine Basiszelle eingegeben, die einen Wert $Z_k$ und einen Wert $C_k$ derart bestimmt, daß

$Z_k = Z_{k-1} + dZ_{k-1}$ $C_k = C_{k-1} + dC_{k-1}$ sind, wenn $FL_k = 1$ ist,
$Z_k = Z_{k-1}$ $C_k = C_{k-1}$ sind, wenn $FL_k = 0$ ist,

- der Wert $Z_{k-1}$ wird in den Speicher MT eingeschrieben, damit ZT = $Z_{k-1}$ ist,
- für jede Zeiteinheit u wird jedes Binärelement des Wertes $Z_{k-1}$ mit jedem im Speicher MP enthaltenen Binärelement des Wertes $UPD_k$ verglichen, wobei mit dem Binärelement mit niedriger Wertigkeit angefangen wird, und es wird ein Vergleichssignal $UPD_k$ derart erzeugt, daß $UPD_k = 1$ ist, wenn $Z_{k-1} < Zc_k$ ist, und es wird ein Signal $CN_k = FL_k \cdot UPD_k$ bestimmt,
- wenn $CN_k = 1$ ist,
  - wird der Wert $Zc_k$ im Laufe der Periode T durch den Wert ZT = $Z_{k-1}$ ersetzt,
  - wird der Wert $C_{k-1}$ in ein Attributregister eingegeben,
- wenn $CN_k = 0$, werden die Daten $Zc_k$ des Ausgangs des Speichers MP im Laufe einer Zyklusdauer T dem Eingang desselben Speichers zugeleitet,
  - gleichzeitig werden dieselben Stufen für die n aufeinanderfolgenden Blöcke so ausgeführt, daß ein vorgegebener Block k seine Informationen aus dem vorangehenden Block (k-1) empfängt, wobei jeder Block zu einem vorgegebenen Zeitpunkt in einem Pipeline-Verfahren folgende Operationen ausführt,
  - das Bestimmen der Werte $XM_0$, $XN_0$ im Laufe des Zyklus $T_r$,
  - das Bestimmen und Speichern der Daten Z bezüglich des vorigen Zyklus $T_{r-1}$,
  - das Bestimmen und Speichern der Daten C bezüglich des vorangehenden Zyklus $T_{r-2}$ und das Aktualisieren des erneuerten Z,
  - alle Informationen Xk aus den k Blöcken stehen an einem Ausgangsbus zur Verfügung, wenn alle Segmente ganz untersucht sind, was eine bestimmte Anzahl von Zyklen T erfordert, die durch die Anzahl der in der betreffenden Visualisierungslinie vorhandenen Segmente bestimmt wird.

10. Schaltung zum Umwandeln von Polygonparametern in Segmentparameter für einen Bildprozessor für dreidimensionalen Objekte nach einem der Ansprüche 5 bis 8, die Eingangsmittel für beschreibende konvexe Polygonparameter dieser Objekte in einem Visualisierungs-Bezugspunkt, Mittel zum Bestimmen der Parameter von Bildelementen eines zweidimensionalen umgeformten Bildes dieses Objekts in der Visualisierungsebene einer Visualisierungsanordnung ausgehend von Polygonparametern, Mittel zum Wahlen und Speichern der Parameter aller Elemente des nächst zur Visualisierungsebene liegenden umgeformten Bildes zum Beseitigen der versteckten Flächen des Objekts enthält, die unter einem aus einer Gruppe von Winkeln ausgewählten Sichtwinkel dargestellt werden, dadurch gekennzeichnet, daß dem Bildprozessor die Parameter von m Polygonen Pm in Form von Koordinaten und Scheitelattributen und von Polygonkantenparamretern eingeben werden, die in einem Bildspeicher gespeichert sind, wobei die Umwandlungsschaltung folgende Elemente enthält:

- einen Addierer, der an einem Eingang das Ausgangssignal eines Eingangsregisters und am anderen Eingang das Ausgangssignal eines Umlaufspeichers empfängt,
- den Umlaufspeicher, der mit dem Addirererausgang verbunden ist und eine Kapazität zum Speichern der durch die betreffende Visualisierungzeile eingefangenen Polygonparameter hat,
- eine Prüf- und Steuerschaltung zum Steuern des vom Addierer ausgegebenen Ergebnisses und zum Ausgeben von Steuersignalen, wenn die Koordinaten der Kantenenden erreicht sind, an den Umlaufspeicher, an das Eingangsregister und an einen Sortierer,
- das Eingangsregister zum Empfangen der Polygonparameter eines Bildspeichers,
- den Sortierer, der von der Prüf- und Steuerschaltung zum Prüfen der Datenlesung des Bildspeichers gesteuert wird und folgende Elemente enthält,
- ein Adreßregister mit den Adressen zum Adressieren der Polygone im Bildspeicher im Laufe der Bearbeitung, wobei das Register von der Prüf- und Steuerschaltung gesteuert wird,
- einen Eingangsstapel mit den gespeicherten Adressen der einzuführenden Polygonparameter, gesteuert von der Prüf- und Steuerschaltung,
- einen Addierer, der die vom Ausgang des Adreßregisters gelieferte Adresse inkrementiert und zum Adressieren des Bildspeichers die inkrementierten Adressen ausgibt, wobei diese inkrementierten Adressen in den Eingang eines Multiplexers neueingeführt werden, der diese inkrementierten Adressen oder neue Adressen im Eingangsstapel unter der Steuerung der Prüf- und Steuerschaltung wählt, um durch ein neues Polygon das Polygon zu ersetzen, das von der Visualisierungslinie nicht eingefangen werden konnte.

FIG.1

$10_1$

$10_2$

$10_n$

$XN_0, XM_0$

$11_1$

$11_2$

$11_n$

$FL_1$

$OE_0$
$Z_0$
$dZ_0$

$C_0$
$dC_0$

$12_1$

$OE_1$

$Z_1$

$dZ_1$

$C_1$

$dC_1$

$12_2$

$12_n$

40

13

FIG.2

$73k$

$CN_k$

$74k$

$71k$

$36_k$

$72k$

FIG.4

FIG.3

FIG.5

FIG.6

EP 0 215 510 B1

FIG.7

FIG. 8

FIG.9

FIG.10